(19) Europäisches Patentamt / European Patent Office / Office européen des brevets

(11) **EP 4 191 318 B1**

(12) **EUROPEAN PATENT SPECIFICATION**

(45) Date of publication and mention
of the grant of the patent:
**12.03.2025 Bulletin 2025/11**

(21) Application number: **21850380.3**

(22) Date of filing: **26.07.2021**

(51) International Patent Classification (IPC):
*G02B 26/10* (2006.01)   *B81B 3/00* (2006.01)
*G02B 26/08* (2006.01)   *H02N 2/04* (2006.01)
*H02N 2/06* (2006.01)

(52) Cooperative Patent Classification (CPC):
**G02B 26/0858; G02B 26/101; H02N 2/028;
H02N 2/04; H02N 2/06**

(86) International application number:
**PCT/JP2021/027606**

(87) International publication number:
**WO 2022/025012 (03.02.2022 Gazette 2022/05)**

(54) **OPTICAL SCANNING DEVICE, METHOD FOR DRIVING SAME, AND IMAGE DRAWING SYSTEM**

OPTISCHE ABTASTVORRICHTUNG, VERFAHREN ZUR ANSTEUERUNG DAVON UND BILDZEICHENSYSTEM

DISPOSITIF DE BALAYAGE OPTIQUE, SON PROCÉDÉ DE COMMANDE ET SYSTÈME DE DESSIN D'IMAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.07.2020 JP 2020130627**

(43) Date of publication of application:
**07.06.2023 Bulletin 2023/23**

(73) Proprietor: **FUJIFILM Corporation
Tokyo 106-8620 (JP)**

(72) Inventors:
• **HISHINUMA, Yoshikazu
Ashigarakami-gun, Kanagawa 258-8577 (JP)**
• **NAONO, Takayuki
Ashigarakami-gun, Kanagawa 258-8577 (JP)**

(74) Representative: **HGF
HGF Limited
1 City Walk
Leeds LS11 9DX (GB)**

(56) References cited:
JP-A- 2011 150 071    JP-A- 2011 150 071
JP-A- 2011 197 233    JP-A- 2012 237 788
JP-A- 2012 237 788    JP-A- 2015 014 691
JP-A- 2018 098 526    JP-A- 2019 534 467
US-A1- 2009 140 356   US-A1- 2018 047 166

**Description**

BACKGROUND OF THE INVENTION

1. Field of the Invention

The technique of the present disclosure relates to an optical scanning device, a method of driving the optical scanning device, and an image drawing system.

2. Description of the Related Art

A micromirror device (also referred to as a microscanner) is known as one of micro electro mechanical systems (MEMS) devices manufactured using the silicon (Si) nanofabrication technique. Since an optical scanning device comprising the micromirror device is small and has low power consumption, it is expected to have a range of applications in an image drawing system such as a laser display or a laser projector.

In the micromirror device, a mirror portion is formed to be swingable around a first axis and a second axis that are orthogonal to each other, and two-dimensional scan with light reflected by the mirror portion is made by allowing the mirror portion to swing around each axis. In addition, there is known a micromirror device capable of performing Lissajous scanning with light by allowing the mirror portion to resonate around each axis.

In such a micromirror device, in order to accurately control a deflection angle of the mirror portion, it is known to provide an angle detection sensor that outputs a signal corresponding to an angle of the mirror portion (for example, see JP2019-082639A and JP2018-063228A).

JP2019-082634A discloses "obtaining an amplitude of rotation of a mirror portion based on an output signal of a detection signal acquisition unit". Specifically, JP2019-082634A discloses "obtaining a peak to peak (P-P) value of a change of a signal voltage corresponding to rotation of the mirror portion, and obtaining an amplitude of rotation of the mirror portion based on data indicating a relationship between the signal voltage and the amplitude of rotation of the mirror portion". The amplitude of rotation of the mirror portion corresponds to the maximum value of the deflection angle (hereinafter, the maximum deflection angle).

JP2018-063228A discloses "acquiring a swing angle of a MEMS mirror based on an amount of change in an angle of the MEMS mirror with respect to a resonance direction in a case where the MEMS mirror is driven at a resonance frequency". JP 2012 237788 A is another relevant document.

SUMMARY OF THE INVENTION

JP2019-082634A and JP2018-063228A disclose that a first angle detection sensor that detects an angle of the mirror portion around a first axis and a second angle detection sensor that detects an angle of the mirror portion around a second axis are provided. However, in a case where the mirror portion swings around the first axis and the second axis simultaneously, a vibration component caused by the swing of the mirror portion around the second axis is superimposed on an output signal of the first angle detection sensor. A vibration component caused by the swing of the mirror portion around the first axis is superimposed on the output signal of the second angle detection sensor. As described above, in a biaxial drive type micromirror device, there is a problem that vibration of an axis different from an axis to be detected is superimposed as noise on an output signal of an angle detection sensor. Hereinafter, this noise is referred to as a vibration noise.

In order to keep the maximum deflection angle of the mirror portion constant, it is necessary to accurately detect the amplitude of the output signal of the angle detection sensor. In addition, in a case where the mirror portion is resonantly driven, it is necessary to accurately detect a phase of the output signal of the angle detection sensor in order to maintain the resonance state of the swing of the mirror portion.

However, in a case where a vibration noise is superimposed on the output signal of the angle detection sensor, the amplitude and phase of the output signal of the angle detection sensor cannot be accurately detected, and it is difficult to accurately control the swing of the mirror portion.

An object of the technique of the present disclosure is to provide an optical scanning device, a method of driving the optical scanning device, and an image drawing system which can accurately control swing of a mirror portion.

According to the technique of the present disclosure, it is possible to provide an optical scanning device, a method of driving the optical scanning device, and an image drawing system which can accurately control a deflection angle of a mirror portion.

In order to achieve the above object, according to the present disclosure, there is provided an optical scanning device comprising: a mirror portion having a reflecting surface for reflecting incident light; a first actuator that allows the mirror portion to swing around a first axis located in a plane including the reflecting surface of the mirror portion in a stationary state; a second actuator that allows the mirror portion to swing around a second axis which is located in the plane including the reflecting surface of the mirror portion in the stationary state and is orthogonal to the first axis; a pair of first angle detection sensors that output a signal corresponding to an angle of the mirror portion around the first axis, the pair of first angle detection sensors being disposed at positions facing each other across the first axis or the second axis; and at least one processor, in which the processor generates a first angle detection signal representing the angle of the mirror portion around the first axis by adding or subtracting a pair of first output signals output from the pair of first angle detection sensors.

It is preferable that the processor adjusts an amplitude level of at least one of the pair of first output signals to match amplitudes of vibration noises respectively included in the pair of first output signals with each other, and then adds or subtracts the pair of first output signals.

It is preferable that the pair of first angle detection sensors are disposed at the positions facing each other across the first axis, and that the processor generates the first angle detection signal by subtracting one of the pair of first output signals whose amplitude level has been adjusted from the other.

It is preferable that the pair of first angle detection sensors are disposed at the positions facing each other across the second axis, and that the processor generates the first angle detection signal by adding the pair of first output signals whose amplitude level has been adjusted.

It is preferable that the processor includes a first driving signal generation unit that generates a first driving signal applied to the first actuator, and feeds back the first angle detection signal to the first driving signal generation unit.

It is preferable that the first driving signal generation unit is a drive circuit having a phase synchronization circuit.

It is preferable that the first driving signal is a sinusoidal wave.

It is preferable that the first angle detection sensor is a piezoelectric element.

It is preferable that the optical scanning device further comprises: a pair of second angle detection sensors that output a signal corresponding to an angle of the mirror portion around the second axis, the pair of second angle detection sensors being disposed at positions facing each other across the first axis or the second axis, and that the processor generates a second angle detection signal representing the angle of the mirror portion around the second axis by adjusting an amplitude level of at least one of a pair of second output signals output from the pair of second angle detection sensors and adding or subtracting the pair of second output signals whose amplitude level has been adjusted.

It is preferable that the processor adjusts the amplitude level of at least one of the pair of second output signals to match amplitudes of vibration noises respectively included in the pair of second output signals with each other, and then adds or subtracts the pair of second output signals.

It is preferable that the pair of second angle detection sensors are disposed at the positions facing each other across the second axis, and that the processor generates the second angle detection signal by subtracting one of the pair of second output signals whose amplitude level has been adjusted from the other.

It is preferable that the pair of second angle detection sensors are disposed at the positions facing each other across the first axis, and that the processor generates the second angle detection signal by adding the pair of second output signals whose amplitude level has been adjusted.

It is preferable that the processor includes a second driving signal generation unit that generates a second driving signal applied to the second actuator, and feeds back the second angle detection signal to the second driving signal generation unit.

It is preferable that the second driving signal generation unit is a drive circuit having a phase synchronization circuit.

It is preferable that the second driving signal is a sinusoidal wave.

It is preferable that the second angle detection sensor is a piezoelectric element.

According to the present disclosure, there is provided an image drawing system comprising: the optical scanning device according to any one of the aspects; and a light source that irradiates the mirror portion with light, in which the processor controls a light irradiation timing of the light source based on the first angle detection signal and the second angle detection signal.

According to the present disclosure, there is provided a method of driving an optical scanning device including a mirror portion having a reflecting surface for reflecting incident light, a first actuator that allows the mirror portion to swing around a first axis located in a plane including the reflecting surface of the mirror portion in a stationary state, a second actuator that allows the mirror portion to swing around a second axis which is located in the plane including the reflecting surface of the mirror portion in the stationary state and is orthogonal to the first axis, and a pair of first angle detection sensors that output a signal corresponding to an angle of the mirror portion around the first axis, the pair of first angle detection sensors being disposed at positions facing each other across the first axis or the second axis, the method comprising: generating a first angle detection signal representing the angle of the mirror portion around the first axis by adding or subtracting a pair of first output signals output from the pair of first angle detection sensors.

According to the technique of the present disclosure, it is possible to provide an optical scanning device, a method of driving the optical scanning device, and an image drawing system which can accurately control swing of a mirror portion.

BRIEF DESCRIPTION OF THE DRAWINGS

Fig. 1 is a schematic view of an optical scanning device.
Fig. 2 is an external perspective view of a micromirror device.
Fig. 3 is a plan view of the micromirror device as viewed from a light incident side.

Fig. 4 is a cross-sectional view taken along the line A-A of Fig. 3.

Fig. 5 is a cross-sectional view taken along the line B-B of Fig. 3.

Fig. 6 is a cross-sectional view taken along the line C-C of Fig. 3.

Fig. 7 is a diagram showing an example in which a first actuator is driven.

Fig. 8 is a diagram showing an example in which a second actuator is driven.

Figs. 9A and 9B are diagrams showing examples of a first driving signal and a second driving signal.

Fig. 10 is a block diagram showing an example of a configuration of a driving controller.

Fig. 11 is a diagram showing an example of signals output from a pair of first angle detection sensors.

Fig. 12 is a diagram showing an example of signals output from a pair of second angle detection sensors.

Fig. 13 is a circuit diagram showing a configuration of a first signal processing unit.

Fig. 14 is a diagram showing filter characteristics of a first BPF circuit and a second BPF circuit included in a gain adjustment circuit of the first signal processing unit.

Fig. 15 is a diagram showing an example of first signal processing.

Fig. 16 is a circuit diagram showing a configuration of a second signal processing unit.

Fig. 17 is a diagram showing filter characteristics of a first BPF circuit and a second BPF circuit included in a gain adjustment circuit of the second signal processing unit.

Fig. 18 is a diagram showing an example of second signal processing.

Fig. 19 is a block diagram showing an example of a configuration of a first driving signal generation unit.

Fig. 20 is a block diagram showing an example of a configuration of a second driving signal generation unit.

Fig. 21 is a diagram illustrating a generation process of a first zero cross pulse.

Fig. 22 is a diagram illustrating a generation process of a second zero cross pulse.

Fig. 23 is a plan view of a micromirror device according to a second embodiment.

Fig. 24 is a diagram showing an example of signals output from a pair of first angle detection sensors according to the second embodiment.

Fig. 25 is a diagram showing an example of signals output from a pair of second angle detection sensors according to the second embodiment.

Fig. 26 is a block diagram showing a configuration of a first driving signal generation unit according to the second embodiment.

Fig. 27 is a diagram showing an example of first signal processing according to the second embodiment.

Fig. 28 is a block diagram showing a configuration of a second driving signal generation unit according to the second embodiment.

Fig. 29 is a diagram showing an example of second signal processing according to the second embodiment.

Fig. 30 is a diagram showing an example of gain and phase characteristics of a band pass filter circuit.

## DESCRIPTION OF THE PREFERRED EMBODIMENTS

An example of an embodiment relating to the technique of the present disclosure will be described with reference to the accompanying drawings.

[First Embodiment]

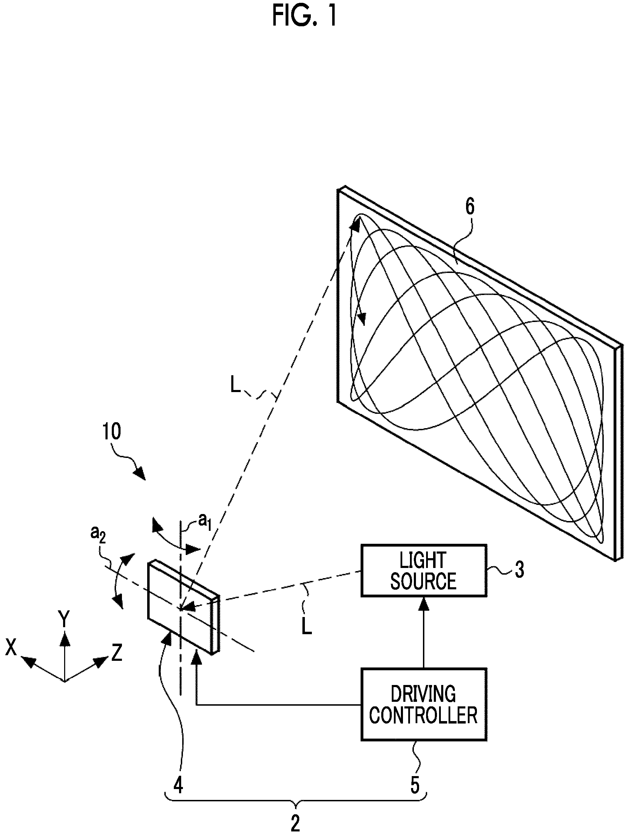

Fig. 1 schematically shows an image drawing system 10 according to an embodiment. The image drawing system 10 includes an optical scanning device 2 and a light source 3. The optical scanning device 2 includes a micromirror device (hereinafter, referred to as micromirror device (MMD)) 4 and a driving controller 5. The driving controller 5 is an example of a "processor" according to the technique of the present disclosure.

The image drawing system 10 draws an image by reflecting a light beam L emitted from the light source 3 by the MMD 4 and optically scanning a surface to be scanned 6 with the reflected light beam under the control of the driving controller 5. The surface to be scanned 6 is, for example, a screen.

The image drawing system 10 is applied to, for example, a Lissajous scanning type laser display. Specifically, the image drawing system 10 can be applied to a laser scanning display such as augmented reality (AR) glass or virtual reality (VR) glass.

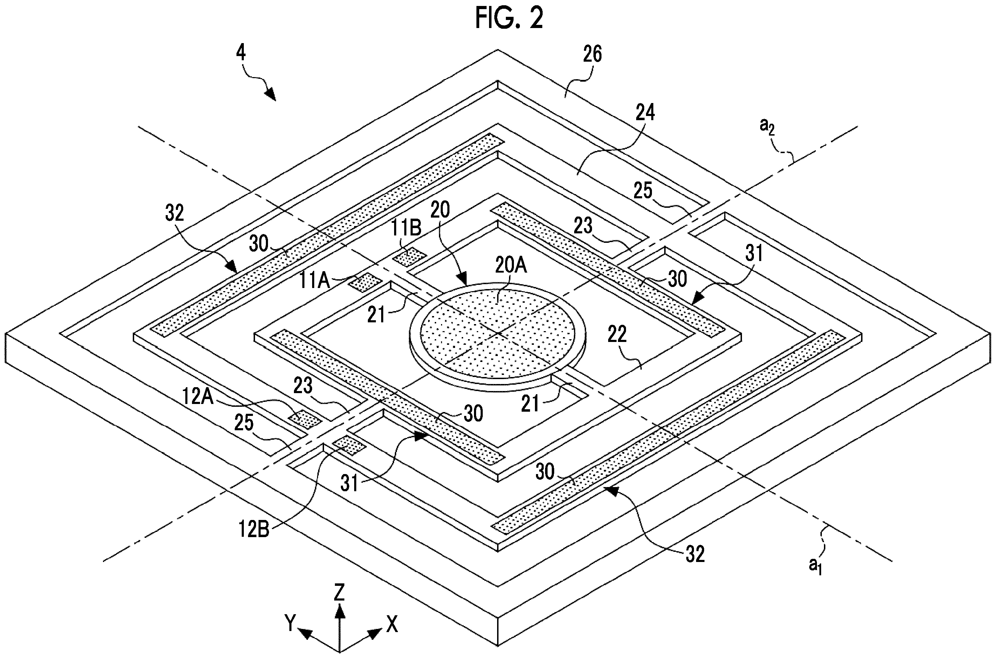

The MMD 4 is a piezoelectric biaxial drive type micromirror device capable of allowing a mirror portion 20 (see Fig. 2) to swing around a first axis $a_1$ and a second axis $a_2$ orthogonal to the first axis $a_1$. Hereinafter, the direction parallel to the second axis $a_2$ is referred to as an X direction, the direction parallel to the first axis $a_1$ is a Y direction, and the direction orthogonal to the first axis $a_1$ and the second axis $a_2$ is referred to as a Z direction.

The light source 3 is a laser device that emits, for example, laser light as the light beam L. It is preferable that the light source 3 emits the light beam L perpendicularly to a reflecting surface 20A (see Fig. 2) included in the mirror portion 20 in a state where the mirror portion 20 of the MMD 4 is stationary. In a case where the light beam L is emitted from the light source 3 perpendicularly to the reflecting surface 20A, the light source 3 may become an obstacle in scanning the surface to be scanned 6 the light beam L for drawing. Therefore, it is preferable that the light beam L emitted from the light source 3 is controlled by an optical system to be emitted perpendicularly to the reflecting surface 20A. The optical system may include a lens or may not include a lens. An angle at which the light beam L emitted from the light source 3 is applied to the reflecting surface 20A is not limited to the perpendicular direction, and the light beam L may be emitted obliquely to the reflecting surface 20A.

The driving controller 5 outputs a driving signal to the light source 3 and the MMD 4 based on optical scanning information. The light source 3 generates the light beam L based on the input driving signal and emits the light beam L to the MMD 4. The MMD 4 allows the mirror portion 20 to swing around the first axis $a_1$ and the second axis $a_2$ based on the input driving signal.

As will be described in detail below, the driving controller 5 allows the mirror portion 20 to resonate around the first axis $a_1$ and the second axis $a_2$, so that the surface to be scanned 6 is scanned with the light beam L reflected by the mirror portion 20 such that a Lissajous waveform is drawn. This optical scanning method is called a Lissajous scanning method.

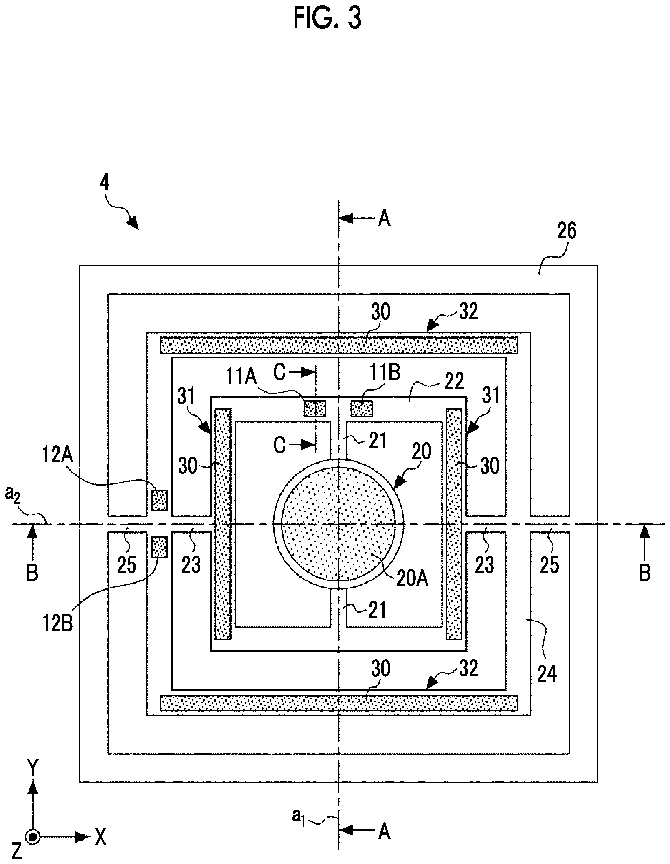

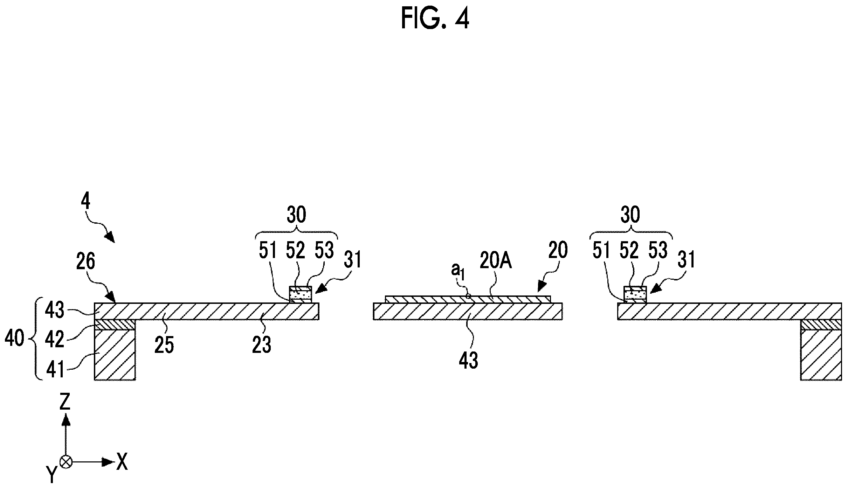

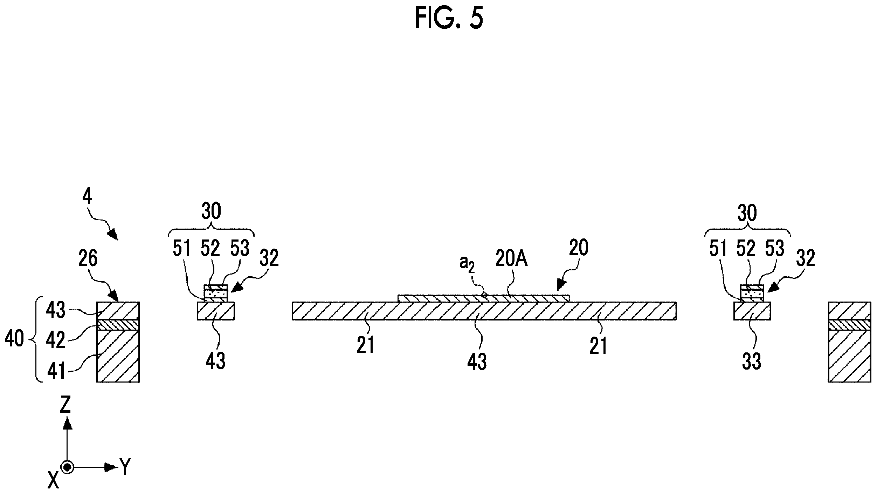

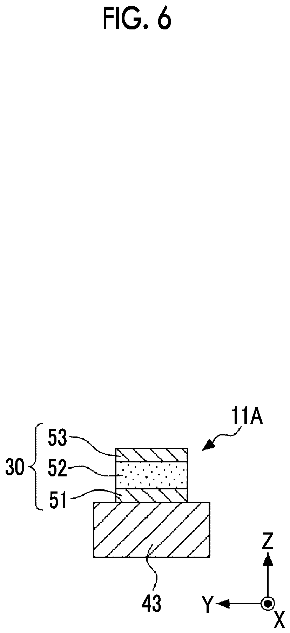

Next, an example of the MMD 4 will be described with reference to Figs. 2 to 6. Fig. 2 is an external perspective view of the MMD 4. Fig. 3 is a plan view of the MMD 4 as viewed from the light incident side. Fig. 4 is a cross-sectional view taken along the line A-A in Fig. 3. Fig. 5 is a cross-sectional view taken along the line B-B of Fig. 3. Fig. 6 is a cross-sectional view taken along the line C-C of Fig. 3.

As shown in Figs. 2 and 3, the MMD 4 includes a mirror portion 20, a first support portion 21, a first movable frame 22, a second support portion 23, a second movable frame 24, a connecting portion 25, and a fixed frame 26. The MMD 4 is a so-called MEMS scanner.

The mirror portion 20 has a reflecting surface 20A for reflecting incident light. The reflecting surface 20A is provided on one surface of the mirror portion 20, and is formed of a metal thin film such as gold (Au), aluminum (Al), silver (Ag), or an alloy of silver. The shape of the reflecting surface 20A is, for example, circular with the intersection of the first axis $a_1$ and the second axis $a_2$ as the center.

The first axis $a_1$ and the second axis $a_2$ exist in a plane including the reflecting surface 20A in a case where the mirror portion 20 is stationary. The planar shape of the MMD 4 is rectangular, line-symmetrical with respect to the first axis $a_1$, and line-symmetrical with respect to the second axis $a_2$.

The first support portions 21 are disposed on an outside of the mirror portion 20 at positions facing each other across the second axis $a_2$. The first support portions 21 are connected to the mirror portion 20 on the first axis $a_1$, and swingably support the mirror portion 20 around the first axis $a_1$. In the present embodiment, the first support portion 21 is a torsion bar stretched along the first axis $a_1$.

The first movable frame 22 is a rectangular frame that surrounds the mirror portion 20 and is connected to the mirror portion 20 on the first axis $a_1$ via the first support portion 21. Piezoelectric elements 30 are formed on the first movable frame 22 at positions facing each other across the first axis $a_1$. In this way, a pair of first actuators 31 are configured by forming two piezoelectric elements 30 on the first movable frame 22.

The pair of first actuators 31 are disposed at positions facing each other across the first axis $a_1$. The first actuators 31 allow the mirror portion 20 to swing around the first axis $a_1$ by applying rotational torque around the first axis $a_1$ to the mirror portion 20.

The second support portions 23 are disposed on an outside of the first movable frame 22 at positions facing each other across the first axis $a_1$. The second support portions 23 are connected to the first movable frame 22 on the second axis $a_2$, and swingably support the first movable frame 22 and the mirror portion 20 around the second axis $a_2$. In the present embodiment, the second support portion 23 is a torsion bar stretched along the second axis $a_2$.

The second movable frame 24 is a rectangular frame that surrounds the first movable frame 22 and is connected to the first movable frame 22 on the second axis $a_2$ via the second support portion 23. The piezoelectric elements 30 are formed on the second movable frame 24 at positions facing each other across the second axis $a_2$. In this way, a pair of second actuators 32 are configured by forming two piezoelectric elements 30 on the second movable frame 24.

The pair of second actuators 32 are disposed at positions facing each other across the second axis $a_2$. The second actuators 32 allow the mirror portion 20 to swing around the second axis $a_2$ by applying rotational torque around the second axis $a_2$ to the mirror portion 20 and the first movable frame 22.

The connecting portions 25 are disposed on an outside of the second movable frame 24 at positions facing each other across the first axis $a_1$. The connecting portions 25 are connected to the second movable frame 24 on the second axis $a_2$.

The fixed frame 26 is a rectangular frame that surrounds the second movable frame 24 and is connected to the second movable frame 24 on the second axis $a_2$ via the connecting portion 25.

The first movable frame 22 is provided with a pair of first angle detection sensors 11A and 11B at positions facing each other across the first axis $a_1$ in the vicinity of the first support portion 21. Each of the pair of first angle detection sensors 11A and 11B is composed of a piezoelectric element. Each of the first angle detection sensors 11A and 11B converts a force applied by deformation of the first support portion 21 accompanying the rotation of the mirror portion 20 around the first axis $a_1$ into a voltage and outputs a signal. That is, the first angle detection sensors 11A and 11B output signals corresponding to angles of the mirror portion 20 around the first axis $a_1$.

The second movable frame 24 is provided with a pair of second angle detection sensors 12A and 12B at positions facing each other across the second axis $a_2$ in the vicinity of the second support portion 23. Each of the pair of second angle detection sensors 12A and 12B is composed of a piezoelectric element. Each of the second angle detection sensors 12A and 12B converts a force applied by deformation of the second support portion 23 accompanying the rotation of the mirror portion 20 around the second axis $a_2$ into a voltage and outputs a signal. That is, the second angle detection sensors 12A and 12B output signals corresponding to angles of the mirror portion 20 around the second axis $a_2$.

In Figs. 2 and 3, the wiring line and the electrode pad for giving the driving signal to the first actuator 31 and the second actuator 32 are not shown. In Figs. 2 and 3, a wiring line and an electrode pad for outputting signals from the first angle detection sensors 11A and 11B and the second angle detection sensors 12A and 12B are not shown. A plurality of the electrode pads are provided on the fixed frame 26.

As shown in Figs. 4 and 5, the MMD 4 is formed, for example, by performing an etching treatment on a silicon on insulator (SOI) substrate 40. The SOI substrate 40 is a substrate in which a silicon oxide layer 42 is provided on a first silicon active layer 41 made of single crystal silicon, and a second silicon active layer 43 made of single crystal silicon is provided on the silicon oxide layer 42.

The mirror portion 20, the first support portion 21, the first movable frame 22, the second support portion 23, the second movable frame 24, and the connecting portion 25 are formed of the second silicon active layer 43 remaining by removing the first silicon active layer 41 and the silicon oxide layer 42 from the SOI substrate 40 by an etching treatment. The second silicon active layer 43 functions as an elastic portion having elasticity. The fixed frame 26 is formed of three layers of the first silicon active layer 41, the silicon oxide layer 42, and the second silicon active layer 43.

The first actuator 31 and the second actuator 32 have the piezoelectric element 30 on the second silicon active layer 43. The piezoelectric element 30 has a laminated structure in which a lower electrode 51, a piezoelectric film 52, and an upper electrode 53 are sequentially laminated on the second silicon active layer 43. An insulating film is provided on the upper electrode 53, but is not shown.

The upper electrode 53 and the lower electrode 51 are formed of, for example, gold (Au) or platinum (Pt). The piezoelectric film 52 is formed of, for example, lead zirconate titanate (PZT), which is a piezoelectric material. The upper electrode 53 and the lower electrode 51 are electrically connected to the driving controller 5 described above via the wiring line and the electrode pad.

A driving voltage is applied to the upper electrode 53 from the driving controller 5. The lower electrode 51 is connected to the driving controller 5 via the wiring line and the electrode pad, and a reference potential (for example, a ground potential) is applied thereto.

In a case where a positive or negative voltage is applied to the piezoelectric film 52 in the polarization direction, deformation (for example, expansion and contraction) proportional to the applied voltage occurs. That is, the piezoelectric film 52 exerts a so-called inverse piezoelectric effect. The piezoelectric film 52 exerts an inverse piezoelectric effect by applying a driving voltage from the driving controller 5 to the upper electrode 53, and displaces the first actuator 31 and the second actuator 32.

As shown in Fig. 6, the first angle detection sensor 11A is also similarly composed of the piezoelectric element 30 consisting of the lower electrode 51, the piezoelectric film 52, and the upper electrode 53 laminated on the second silicon active layer 43. In a case where force (pressure) is applied to the piezoelectric film 52, polarization proportional to the pressure is generated. That is, the piezoelectric film 52 exerts a piezoelectric effect. The piezoelectric film 52 exerts a piezoelectric effect and generates a voltage in a case where force is applied by deformation of the first support portion 21 accompanying the rotation of the mirror portion 20 around the first axis $a_1$.

Since the first angle detection sensor 11B has the same configuration as the first angle detection sensor 11A, the first angle detection sensor 11B is not shown. In addition, since the second angle detection sensors 12A and 12B have the same configuration as the first angle detection sensor 11A, the second angle detection sensors 12A and 12B are not shown.

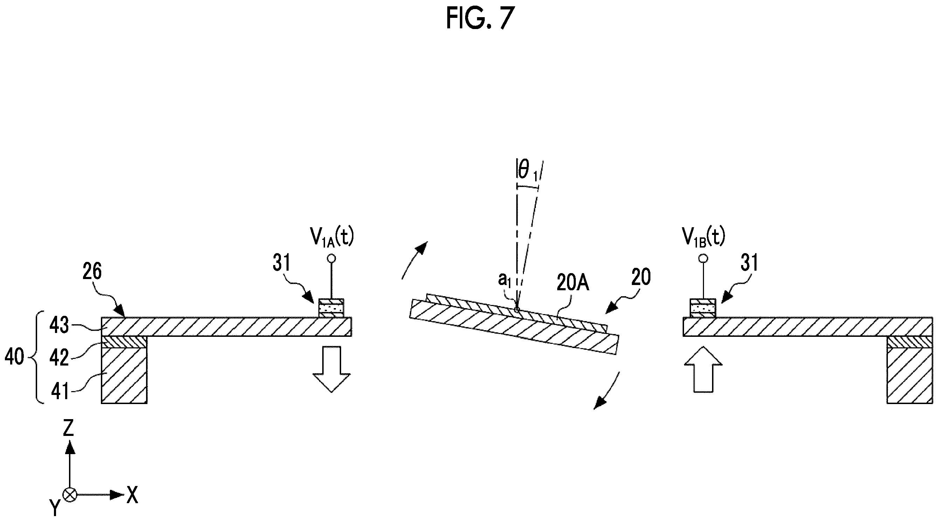

Fig. 7 shows an example in which one piezoelectric film 52 of the pair of first actuators 31 is extended and the other piezoelectric film 52 is contracted, thereby generating rotational torque around the first axis $a_1$ in the first actuator 31. In this way, one of the pair of first actuators 31 and the other are displaced in opposite directions to each other, whereby the mirror portion 20 rotates around the first axis $a_1$.

In addition, Fig. 7 shows an example in which the first actuator 31 is driven in an anti-phase resonance mode in which the displacement direction of the pair of first actuators 31 and the rotation direction of the mirror portion 20 are opposite to each other. The first actuator 31 may be driven in an in-phase resonance mode in which the displacement direction of the pair of first actuators 31 and the rotation direction of the mirror portion 20 are the same direction.

A deflection angle (hereinafter, referred to as a first deflection angle) $\theta_1$ of the mirror portion 20 around the first axis $a_1$ is controlled by the driving signal (hereinafter, referred to as a first driving signal) given to the first actuator 31 by the driving controller 5. The first driving signal is, for example, a sinusoidal AC voltage. The first driving signal includes a driving voltage waveform $V_{1A}(t)$ applied to one of the pair of first actuators 31 and a driving voltage waveform $V1_B(t)$ applied to the other. The driving voltage waveform $V_{1A}(t)$ and the driving voltage waveform $V_{1B}(t)$ are in an anti-phase with each other (that is, the phase difference is 180°).

The first deflection angle $\theta_1$ is an angle at which the normal line of the reflecting surface 20A is inclined with respect to the Z direction in an XZ plane.

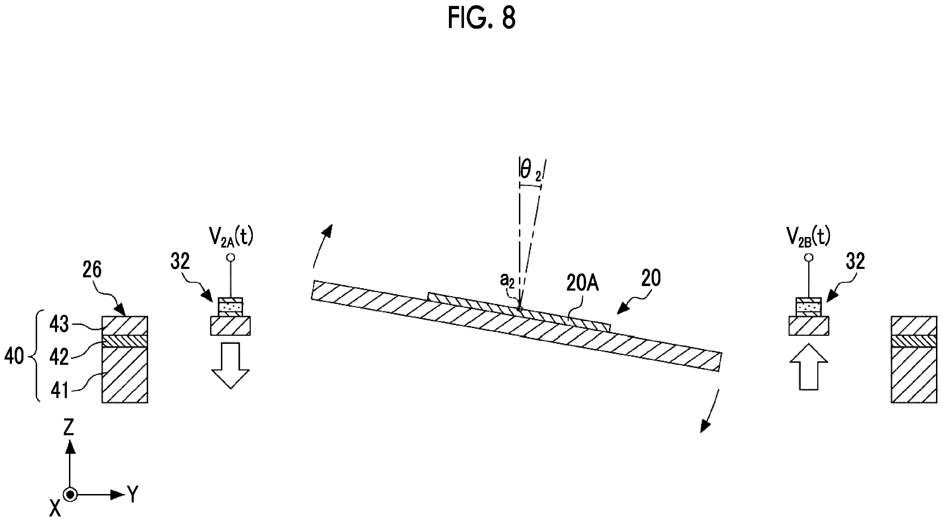

Fig. 8 shows an example in which one piezoelectric film 52 of the pair of second actuators 32 is extended and the other piezoelectric film 52 is contracted, thereby generating rotational torque around the second axis $a_2$ in the second actuator 32. In this way, one of the pair of second actuators 32 and the other are displaced in opposite directions to each other, whereby the mirror portion 20 rotates around the second axis $a_2$.

In addition, Fig. 8 shows an example in which the second actuator 32 is driven in an anti-phase resonance mode in which the displacement direction of the pair of second actuators 32 and the rotation direction of the mirror portion 20 are opposite to each other. The second actuator 32 may be driven in an in-phase resonance mode in which the displacement direction of the pair of second actuators 32 and the rotation direction of the mirror portion 20 are the same direction.

A deflection angle (hereinafter, referred to as a second deflection angle) $\theta_2$ of the mirror portion 20 around the second axis $a_2$ is controlled by the driving signal (hereinafter, referred to as a second driving signal) given to the second actuator 32 by the driving controller 5. The second driving signal is, for example, a sinusoidal AC voltage. The second driving signal includes a driving voltage waveform $V_{2A}$ (t) applied to one of the pair of second actuators 32 and a driving voltage waveform $V_{2B}$ (t) applied to the other. The driving voltage waveform $V_{2A}$ (t) and the driving voltage waveform $V_{2B}$ (t) are in an anti-phase with each other (that is, the phase difference is 180°).

The second deflection angle $\theta_2$ is an angle at which the normal line of the reflecting surface 20A is inclined with respect to the Z direction in a YZ plane.

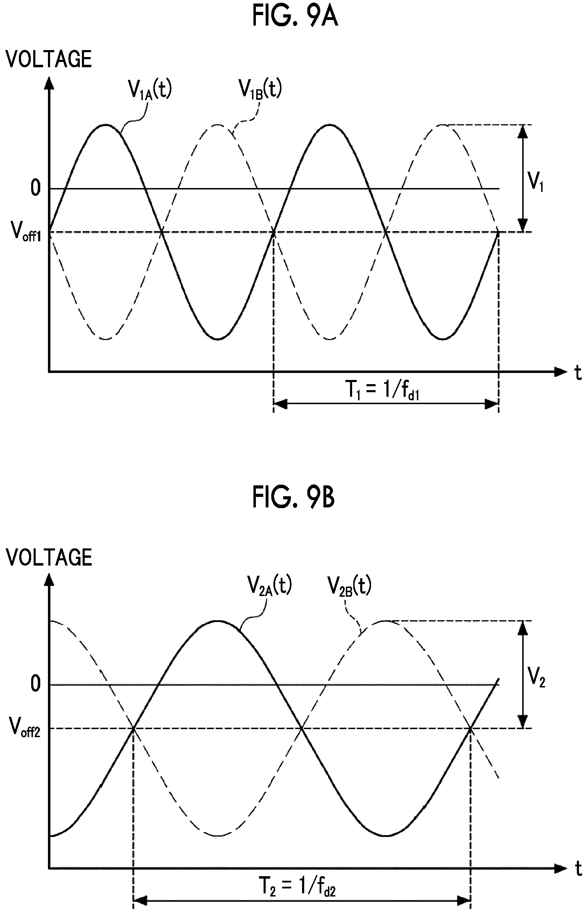

Figs. 9A and 9B show examples of the first driving signal and the second driving signal. Fig. 9A shows the driving voltage waveforms $V_{1A}$ (t) and $V_{1B}$ (t) included in the first driving signal. Fig. 9B shows the driving voltage waveforms $V_{2A}$ (t) and $V_{2B}$ (t) included in the second driving signal.

The driving voltage waveforms $V_{1A}$ (t) and $V_{1B}$ (t) are represented as follows, respectively.

$$V_{1A} (t) = V_{off1} + V_1\sin(2\pi f_{d1}t)$$

$$V_{1B} (t) = V_{off1} + V_1\sin(2\pi f_{d1}t + \alpha)$$

Here, $V_1$ is the amplitude voltage. $V_{off1}$ is the bias voltage. $f_{d1}$ is the driving frequency (hereinafter, referred to as the first driving frequency). t is time. $\alpha$ is the phase difference between the driving voltage waveforms $V_{1A}$ (t) and $V_{1B}$ (t). In the present embodiment, for example, $\alpha$ = 180°.

By applying the driving voltage waveforms $V_{1A}$ (t) and $V_{1B}$ (t) to the pair of first actuators 31, the mirror portion 20 swings around the first axis $a_1$ at the first driving frequency $f_{d1}$ (see Fig. 7).

The driving voltage waveforms $V_{2A}$ (t) and $V_{2B}$ (t) are represented as follows, respectively.

$$V_{2A} (t) = V_{off2} + V_2\sin(2\pi f_{d2}t + \varphi)$$

$$V_{2B} (t) = V_{off2} + V_2\sin(2\pi f_{d2}t + \beta + \varphi)$$

Here, $V_2$ is the amplitude voltage. $V_{off2}$ is the bias voltage. $f_{d2}$ is the driving frequency (hereinafter, referred to as the second driving frequency). t is time. $\beta$ is the phase difference between the driving voltage waveforms $V_{2A}$ (t) and $V_{2B}$ (t). In the present embodiment, for example, $\beta$ = 180°. In addition, $\varphi$ is the phase difference between the driving voltage waveforms $V_{1A}$ (t) and $V_{1B}$ (t) and the driving voltage waveforms $V_{2A}$ (t) and $V_{2B}$ (t). In the present embodiment, for example, $V_{off1}$ = $V_{off2}$ = 0 V

By applying the driving voltage waveforms $V_{2A}$ (t) and $V_{2B}$ (t) to the pair of second actuators 32, the mirror portion 20 swings around the second axis $a_2$ at the second driving frequency $f_{d2}$ (see Fig. 8).

The first driving frequency $f_{d1}$ is set so as to match the resonance frequency around the first axis $a_1$ of the mirror portion 20. The second driving frequency $f_{d2}$ is set so as to match the resonance frequency around the second axis $a_2$ of the mirror portion 20. In the present embodiment, $f_{d1}$ > $f_{a2}$. That is, in the mirror portion 20, a swing frequency around the first axis $a_1$ is higher than a swing frequency around the second axis $a_2$. The first driving frequency $f_{d1}$ and the second driving frequency $f_{d2}$ do not necessarily have to match the resonance frequency. For example, the first driving frequency $f_{d1}$ and the second driving frequency $f_{d2}$ may be frequencies within a frequency range in the vicinity of the resonance frequency (for example, a range of half-width of frequency distribution having the resonance frequency as a peak value). This frequency range is, for example, within a range of a so-called Q value.

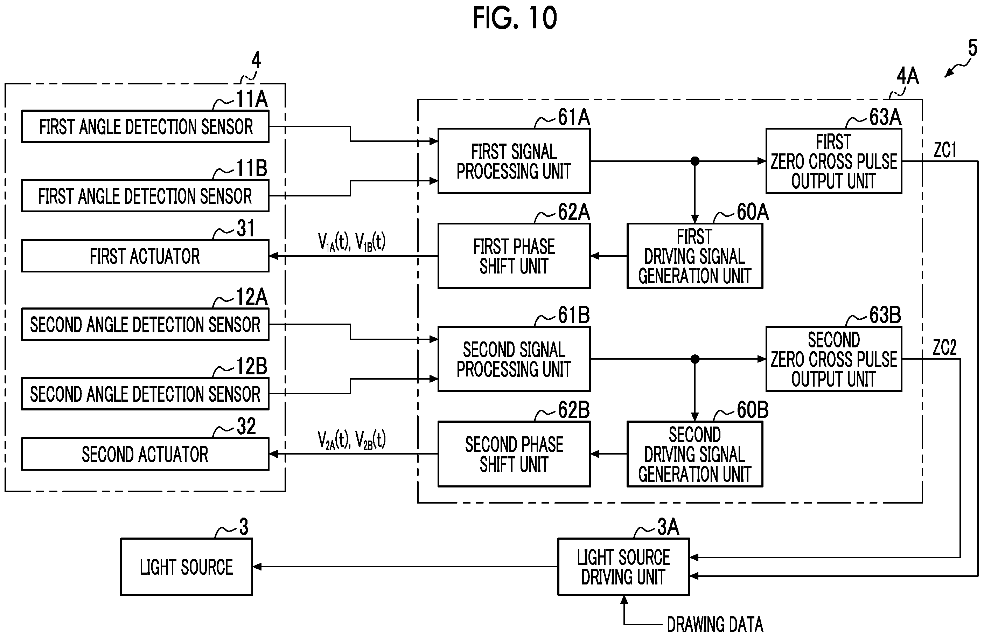

Fig. 10 shows an example of a configuration of the driving controller 5. The driving controller 5 includes a mirror driving unit 4A and a light source driving unit 3A. The mirror driving unit 4A includes a first driving signal generation unit 60A, a first signal processing unit 61A, a first phase shift unit 62A, a first zero cross pulse output unit 63A, a second driving signal generation unit 60B, a second signal processing unit 61B, a second phase shift unit 62B, and a second zero cross pulse output unit 63B.

The first driving signal generation unit 60A, the first signal processing unit 61A, and the first phase shift unit 62A perform feedback control such that the swing of the mirror portion 20 around the first axis $a_1$ maintains a resonance state. The second driving signal generation unit 60B, the second signal processing unit 61B, and the second phase shift unit 62B perform feedback control such that the swing of the mirror portion 20 around the

second axis $a_2$ maintains a resonance state.

The first driving signal generation unit 60A generates the first driving signal including the above-described driving voltage waveforms $V_{1A}$ (t) and $V_{1B}$ (t) based on a reference waveform, and applies the generated first driving signal to the pair of first actuators 31 via the first phase shift unit 62A. Thereby, the mirror portion 20 swings around the first axis $a_1$. The first angle detection sensors 11A and 11B output signals corresponding to angles of the mirror portion 20 around the first axis $a_1$.

The second driving signal generation unit 60B generates the second driving signal including the above-described driving voltage waveforms $V_{2A}$ (t) and $V_{2B}$ (t) based on a reference waveform, and applies the generated second driving signal to the pair of second actuators 32 via the second phase shift unit 62B. Thereby, the mirror portion 20 swings around the second axis $a_2$. The second angle detection sensors 12A and 12B output signals corresponding to angles of the mirror portion 20 around the second axis $a_2$.

The first driving signal generated by the first driving signal generation unit 60A and the second driving signal generated by the second driving signal generation unit 60B are phase-synchronized.

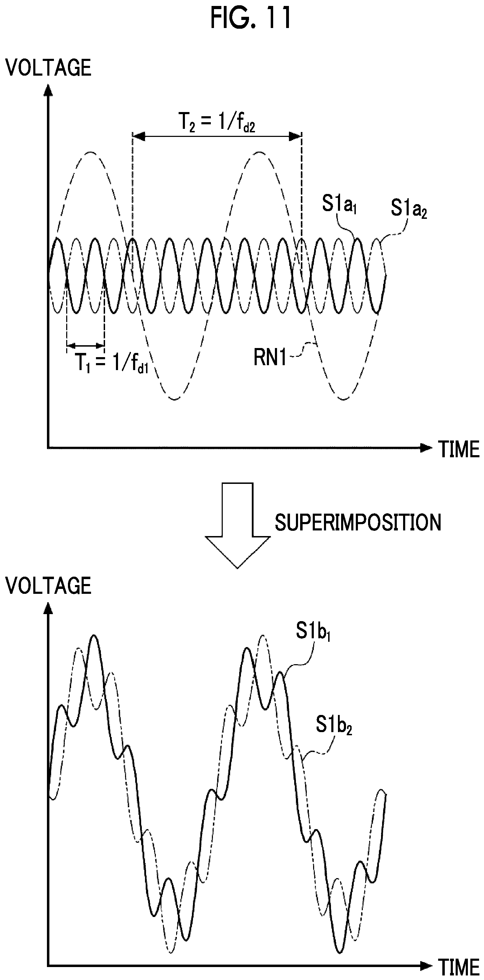

Fig. 11 shows an example of signals output from the pair of first angle detection sensors 11A and 11B. In Fig. 11, $S1a_1$ and $S1a_2$ represent signals output from the pair of first angle detection sensors 11A and 11B in a case where the mirror portion 20 swings only around the first axis $a_1$ without swinging around the second axis $a_2$. The signals $S1a_1$ and $S1a_2$ are waveform signals similar to a sinusoidal wave having the first driving frequency $f_{d1}$ and are in an anti-phase with each other.

In a case where the mirror portion 20 swings around the first axis $a_1$ and the second axis $a_2$ simultaneously, a vibration noise RN1 caused by the swing of the mirror portion 20 around the second axis $a_2$ is superimposed on the output signals of the pair of first angle detection sensors 11A and 11B. $S1b_1$ represents a signal in which the vibration noise RN1 is superimposed on the signal $S1a_1$. $S1b_2$ represents a signal in which the vibration noise RN1 is superimposed on the signal $S1a_2$. For the purpose of the description of this embodiment, the vibration noise RN1 is emphasized.

As described above, in a case of the biaxial drive, the signals S1b; and $S1b_2$ on which the vibration noise RN1 is superimposed are output from the first angle detection sensors 11A and 11B, and amplitudes of the signals S1b; and $S1b_2$ fluctuate every cycle. Therefore, it is difficult to directly obtain the amplitude and the phase based on the signals $S1b_1$ and $S1b_2$ output from the first angle detection sensors 11A and 11B.

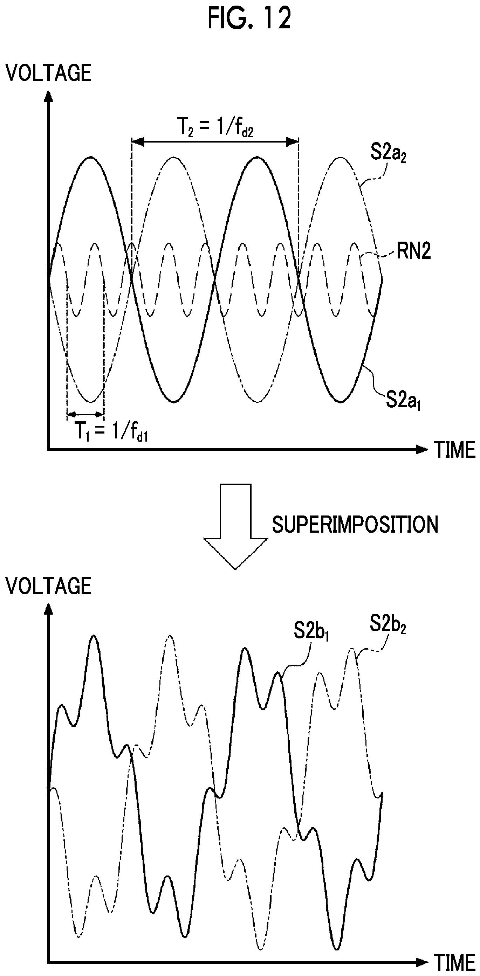

Fig. 12 shows an example of signals output from the pair of second angle detection sensors 12A and 12B. In Fig. 12, $S2a_1$ and $S2a_2$ represent signals output from the pair of second angle detection sensors 12A and 12B in a case where the mirror portion 20 swings only around the second axis $a_2$ without swinging around the first axis $a_1$. The signals $S2a_1$ and $S2a_2$ are waveform signals similar to a sinusoidal wave having the second driving frequency $f_{d2}$ and are in an anti-phase with each other.

In a case where the mirror portion 20 swings around the first axis $a_1$ and the second axis $a_2$ simultaneously, a vibration noise RN2 caused by the swing of the mirror portion 20 around the first axis $a_1$ is superimposed on the output signals of the pair of second angle detection sensors 12A and 12B. $S2b_1$ represents a signal in which the vibration noise RN2 is superimposed on the signal $S2a_1$. $S2b_2$ represents a signal in which the vibration noise RN2 is superimposed on the signal $S2a_2$. For the purpose of the description of this embodiment, the vibration noise RN2 is emphasized.

As described above, in a case of the biaxial drive, the signals $S12b_1$ and $S2b_2$ on which the vibration noise RN2 is superimposed are output from the second angle detection sensors 12A and 12B, and amplitudes of the signals $S2b_1$ and $S2b_2$ fluctuate every cycle. Therefore, it is difficult to directly obtain the amplitude and the phase based on the signals $S2b_1$ and $S2b_2$ output from the second angle detection sensors 12A and 12B.

The first signal processing unit 61A generates a signal (hereinafter, a first angle detection signal) S1c from which the vibration noise RN1 has been removed based on $S1a_1$ and $S1a_2$ output from the pair of first angle detection sensors 11A and 11B. The second signal processing unit 61B generates a signal (hereinafter, a second angle detection signal) S2c from which the vibration noise RN2 has been removed based on $S2a_1$ and $S2a_2$ output from the pair of second angle detection sensors 12A and 12B.

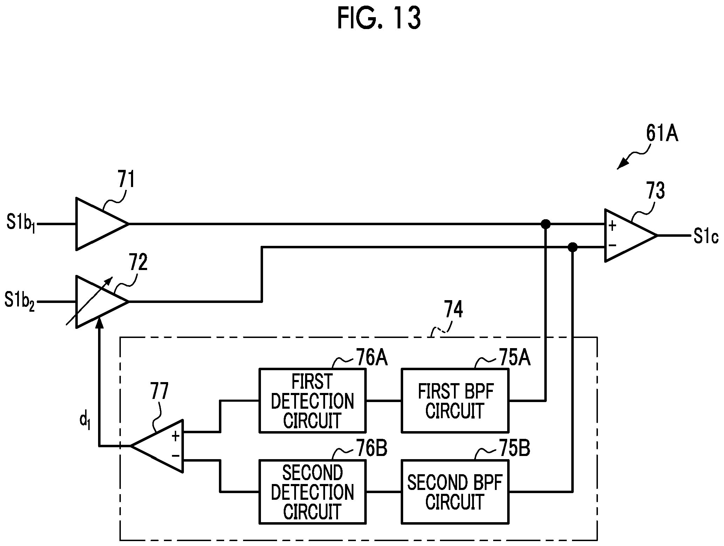

Fig. 13 shows a configuration of the first signal processing unit 61A. The first signal processing unit 61A includes an analog arithmetic circuit. As shown in Fig. 13, the first signal processing unit 61A is composed of a buffer amplifier 71, a variable gain amplifier 72, a subtraction circuit 73, and a gain adjustment circuit 74. The gain adjustment circuit 74 is composed of a first band pass filter (BPF) circuit 75A, a second BPF circuit 75B, a first detection circuit 76A, a second detection circuit 76B, and a subtraction circuit 77. The subtraction circuit 73 and the subtraction circuit 77 are differential amplification circuits including an operational amplifier.

The signal S1b; output from the first angle detection sensor 11A is input to a positive input terminal (non-inverting input terminal) of the subtraction circuit 73 via the buffer amplifier 71. In addition, the signal output from the buffer amplifier 71 is branched in the middle of the process before being input to the subtraction circuit 73, and is input to the first BPF circuit 75A in the gain adjustment circuit 74.

The signal $S1b_2$ output from the first angle detection sensor 11B is input to a negative input terminal (inverting input terminal) of the subtraction circuit 73 via the variable gain amplifier 72. In addition, the signal output from the variable gain amplifier 72 is branched in the middle of the process before being input to the subtraction circuit 73, and is input to the second BPF circuit 75B in the gain adjustment circuit 74.

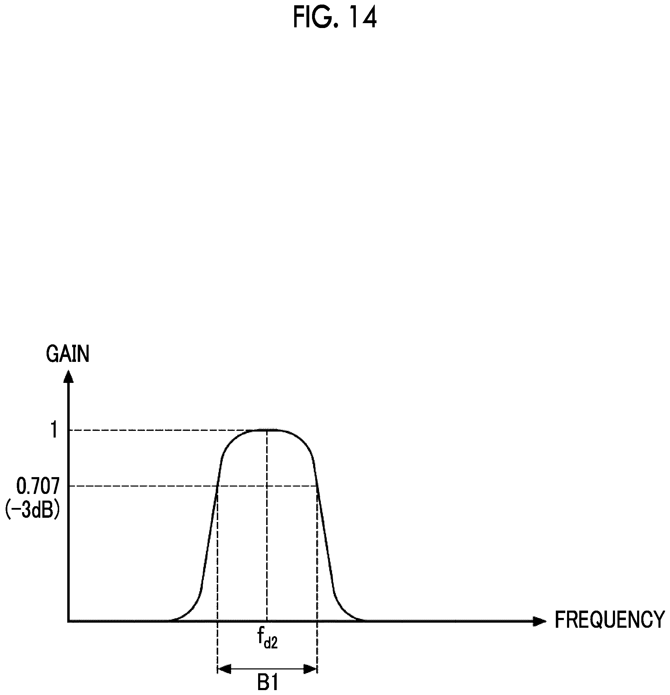

Each of the first BPF circuit 75A and the second BPF circuit 75B has a pass band B1 having the second driving frequency $f_{d2}$ as a center frequency, as shown in Fig. 14. The pass band B1 is, for example, a frequency band of $f_{d2} \pm 5$ kHz. Since the vibration noise RN1 has the second driving frequency $f_{d2}$, the vibration noise RN1 passes through the pass band B1. Therefore, the first BPF circuit 75A extracts and outputs the vibration noise RN1 (see Fig. 11) from the signal input from the buffer amplifier 71. The second BPF circuit 75B extracts and outputs the vibration noise RN1 (see Fig. 11) from the signal input from the variable gain amplifier 72.

Each of the first detection circuit 76A and the second detection circuit 76B is composed of, for example, a root mean squared value to direct current converter (RMS-DC converter). The first detection circuit 76A converts the amplitude of the vibration noise RN1 input from the first BPF circuit 75A into a DC voltage signal and inputs the signal to the positive input terminal of the subtraction circuit 77. The second detection circuit 76B converts the amplitude of the vibration noise RN1 input from the second BPF circuit 75B into a DC voltage signal and inputs the signal to the negative input terminal of the subtraction circuit 77.

The subtraction circuit 77 outputs a value $d_1$ obtained by subtracting the DC voltage signal input from the second detection circuit 76B from the DC voltage signal input from the first detection circuit 76A. The value $d_1$ corresponds to a difference between the amplitude of the vibration noise RN1 included in the signal $S1b_1$ output from the first angle detection sensor 11A and the amplitude of the vibration noise RN1 included in the signal $S1b_2$ output from the first angle detection sensor 11B. The subtraction circuit 77 inputs the value $d_1$ as a gain adjustment value to a gain adjustment terminal of the variable gain amplifier 72.

The variable gain amplifier 72 adjusts an amplitude level of the signal $S1b_2$ by multiplying the signal $S1b_2$ input from the first angle detection sensor 11B by the value $d_1$ input as the gain adjustment value. In this way, a feedback control is performed by the gain adjustment circuit 74, so that the amplitude of the vibration noise RN1 included in the signal S1b; after passing through the variable gain amplifier 72 is adjusted so as to match the amplitude of the vibration noise RN1 included in the signal S1b; after passing through the buffer amplifier 71.

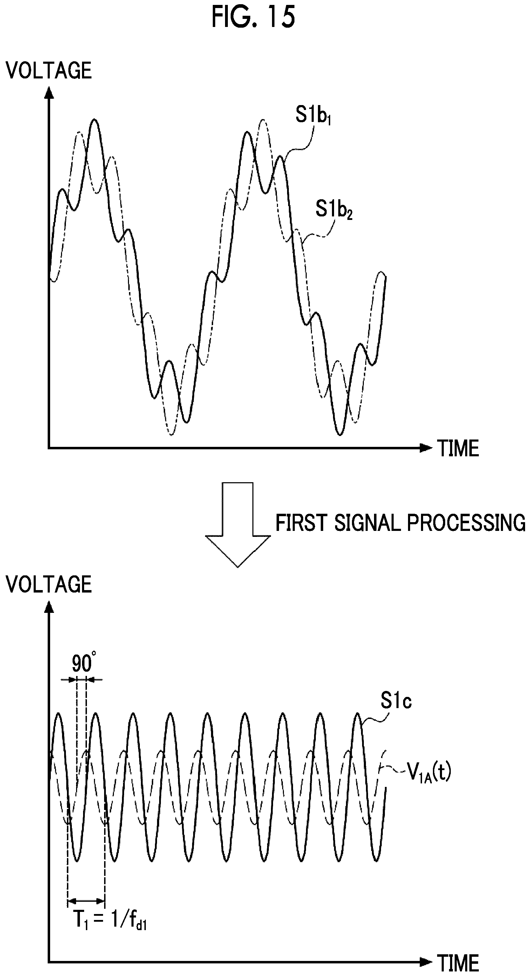

The subtraction circuit 73 outputs a value obtained by subtracting the signal $S1b_2$ input to the negative input terminal from the signal S1b; input to the positive input terminal. Since the amplitudes of the vibration noise RN1 included in both signals match with each other by the feedback control, the vibration noise RN1 included in both signals is offset by the subtraction processing by the subtraction circuit 73. Therefore, the subtraction circuit 73 outputs the first angle detection signal S1c (see Fig. 15), which is a signal from which the vibration noise RN1 has been removed.

Fig. 15 shows a state in which the first angle detection signal S1c is generated based on S1b; and $S1b_2$ output from the pair of first angle detection sensors 11A and 11B. The first angle detection signal S1c corresponds to a signal obtained by doubling an amplitude of a signal obtained by removing the vibration noise RN1 from the signal $S1b_1$.

The first angle detection signal S1c generated by the first signal processing unit 61A is input to the first driving signal generation unit 60A and the first zero cross pulse output unit 63A. In a case where the swing of the mirror portion 20 around the first axis $a_1$ maintains a resonance state, as shown in Fig. 15, the first angle detection signal S1c output from the first signal processing unit 61A has a phase delay of 90° with respect to the driving voltage waveform $V_{1A}$ (t) included in the first driving signal.

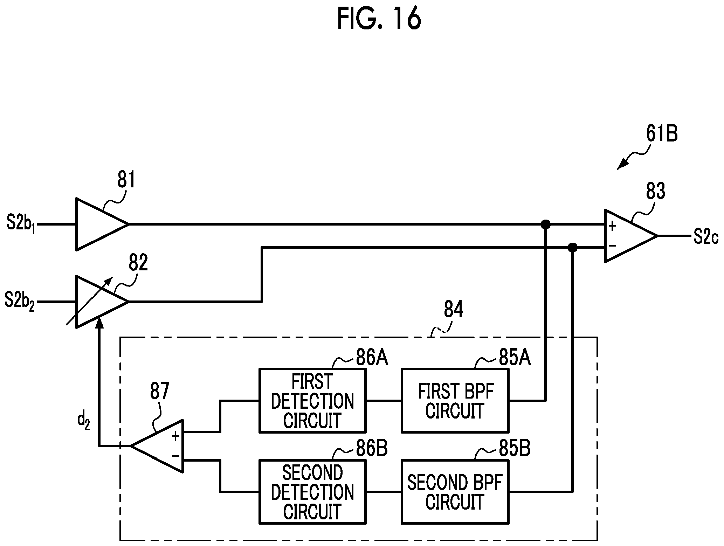

As shown in Fig. 16, the second signal processing unit 61B is composed of a buffer amplifier 81, a variable gain amplifier 82, a subtraction circuit 83, and a gain adjustment circuit 84. The gain adjustment circuit 84 is composed of a first BPF circuit 85A, a second BPF circuit 85B, a first detection circuit 86A, a second detection circuit 86B, and a subtraction circuit 87. The subtraction circuit 83 and the subtraction circuit 87 are differential amplification circuits including an operational amplifier.

The signal $S2b_1$ output from the second angle detection sensor 12A is input to a positive input terminal of the subtraction circuit 83 via the buffer amplifier 81. In addition, the signal output from the buffer amplifier 81 is branched in the middle of the process before being input to the subtraction circuit 83, and is input to the first BPF circuit 85A in the gain adjustment circuit 84.

The signal $S2b_2$ output from the second angle detection sensor 12B is input to a negative input terminal of the subtraction circuit 83 via the variable gain amplifier 82. In addition, the signal output from the variable gain amplifier 82 is branched in the middle of the process before being input to the subtraction circuit 83, and is input to the second BPF circuit 85B in the gain adjustment circuit 84.

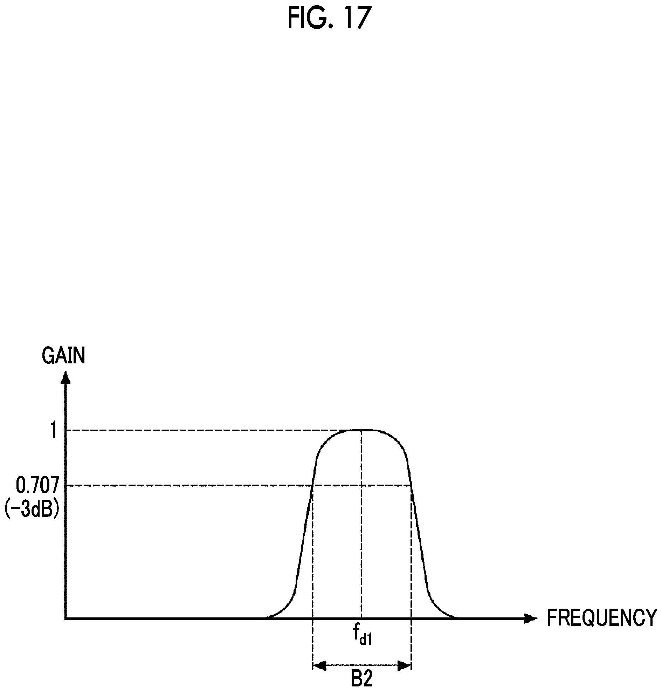

Each of the first BPF circuit 85A and the second BPF circuit 85B has a pass band B2 having the first driving frequency $f_{d1}$ as a center frequency, as shown in Fig. 17. The pass band B2 is, for example, a frequency band of $f_{d1} \pm 5$ kHz. Since the vibration noise RN2 has the first driving frequency $f_{d1}$, the vibration noise RN2 passes through the pass band B2. Therefore, the first BPF circuit 85A extracts and outputs the vibration noise RN2 (see Fig. 12) from the signal input from the buffer amplifier 81. The second BPF circuit 85B extracts and outputs the vibration noise RN2 (see Fig. 12) from the signal input from the variable gain amplifier 82.

Each of the first detection circuit 86A and the second detection circuit 86B is composed of, for example, an RMS-DC converter. The first detection circuit 86A converts the amplitude of the vibration noise RN2 input from the first BPF circuit 85A into a DC voltage signal and inputs the signal to the positive input terminal of the subtraction circuit 87. The second detection circuit 86B converts the amplitude of the vibration noise RN2 input from the second BPF circuit 85B into a DC voltage signal and inputs the signal to the negative input terminal of the subtraction circuit 87.

The subtraction circuit 87 outputs a value $d_2$ obtained by subtracting the DC voltage signal input from the second detection circuit 86B from the DC voltage signal input from the first detection circuit 86A. The value $d_2$ corresponds to a difference between the amplitude of the vibration noise RN2 included in the signal $S2b_1$ output from the second angle detection sensor 12A and the amplitude of the vibration noise RN2 included in the signal $S2b_2$ output from the second angle detection sensor 12B. The subtraction circuit 87 inputs the value $d_2$ as a gain adjustment value to a gain adjustment terminal of the variable gain amplifier 82.

The variable gain amplifier 82 adjusts an amplitude level of the signal $S2b_2$ by multiplying the signal $S2b_2$ input from the second angle detection sensor 12B by the value $d_2$ input as the gain adjustment value. In this way, a feedback control is performed by the gain adjustment circuit 84, so that the amplitude of the vibration noise RN2 included in the signal $S2b_2$ after passing through the variable gain amplifier 82 is adjusted so as to match the amplitude of the vibration noise RN2 included in the signal $S2b_1$ after passing through the buffer amplifier 81.

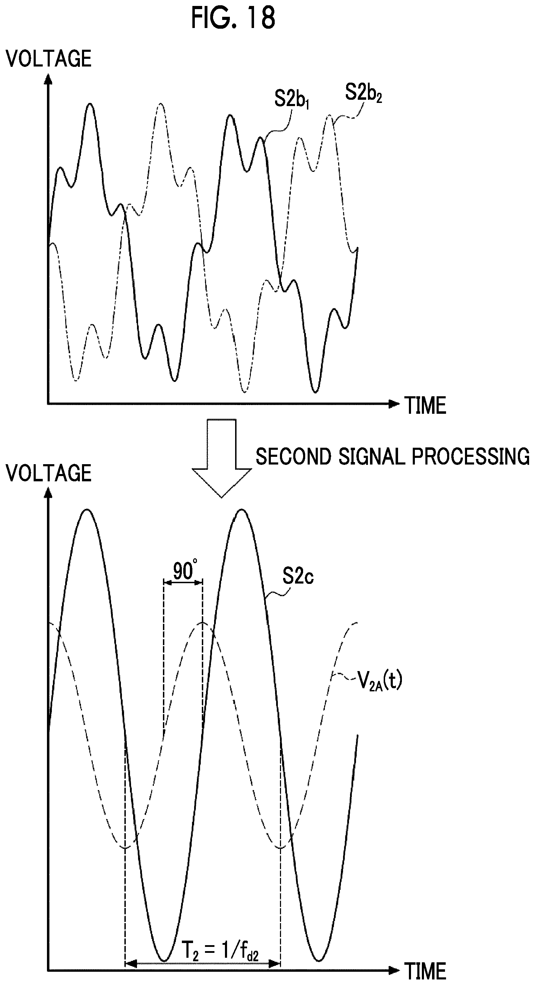

The subtraction circuit 83 outputs a value obtained by subtracting the signal $S2b_2$ input to the negative input terminal from the signal $S2b_1$ input to the positive input terminal. Since the amplitudes of the vibration noise RN2 included in both signals match with each other by the feedback control, the vibration noise RN2 included in both signals is offset by the subtraction processing by the subtraction circuit 83. Therefore, the subtraction circuit 83 outputs the second angle detection signal S2c (see Fig. 18), which is a signal from which the vibration noise RN2 has been removed.

Fig. 18 shows a state in which the second angle detection signal S2c is generated based on $S2b_1$ and $S2b_2$ output from the pair of second angle detection sensors 12A and 12B. The second angle detection signal S2c corresponds to a signal obtained by doubling an amplitude of a signal obtained by removing the vibration noise RN2 from the signal $S2b_1$.

The second angle detection signal S2c generated by the second signal processing unit 61B is input to the second driving signal generation unit 60B and the second zero cross pulse output unit 63B. In a case where the swing of the mirror portion 20 around the second axis $a_2$ maintains a resonance state, as shown in Fig. 18, the second angle detection signal S2c output from the second signal processing unit 61B has a phase delay of 90° with respect to the driving voltage waveform $V_{2A}$ (t) included in the second driving signal.

Returning to Fig. 10, the first angle detection signal S1c input from the first signal processing unit 61A is fed back to the first driving signal generation unit 60A. The first phase shift unit 62A shifts the phase of the driving voltage waveform output from the first driving signal generation unit 60A. The first phase shift unit 62A shifts the phase by 90°, for example.

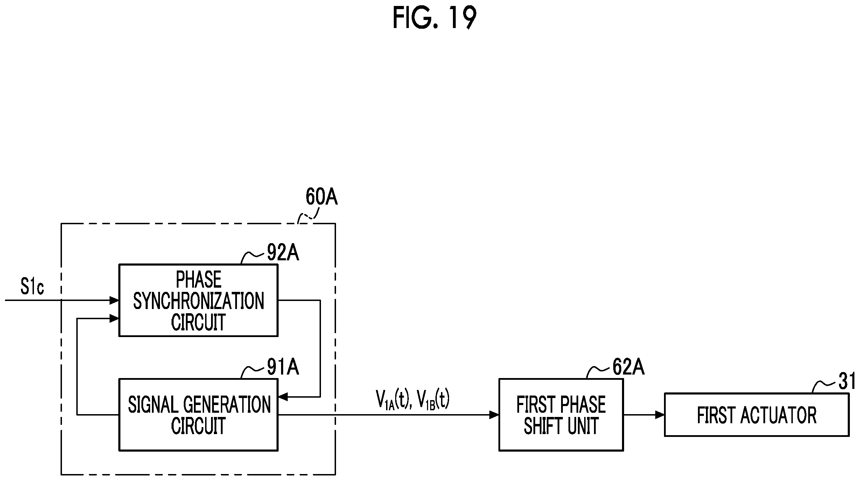

Fig. 19 shows an example of a configuration of the first driving signal generation unit 60A. As shown in Fig. 19, the first driving signal generation unit 60A includes a signal generation circuit 91A and a phase synchronization circuit 92A. The first driving signal generation unit 60A is a so-called phase locked loop (PLL) type drive circuit.

A sampling reset signal having the first driving frequency $f_{d1}$ is input to the phase synchronization circuit 92A from the signal generation circuit 91A, and the first angle detection signal S1c is input from the first signal processing unit 61A (see Fig. 10). The phase synchronization circuit 92A adjusts a phase of a sampling clock signal generated by itself based on the sampling reset signal and the first angle detection signal S1c.

The signal generation circuit 91A generates the driving voltage waveforms $V_{1A}$ (t) and $V_{1B}$ (t) constituting the first driving signal based on the sampling clock signal input from the phase synchronization circuit 92A.

In this way, the feedback control is performed such that a phase difference between the first driving signal and the first angle detection signal S1c is maintained at 90° by the first phase shift unit 62A and the first driving signal generation unit 60A of the PLL type. By maintaining the phase difference between the first driving signal and the first angle detection signal S1c at 90°, the swing of the mirror portion 20 around the first axis $a_1$ is maintained in a resonance state.

The second angle detection signal S2c input from the second signal processing unit 61B is fed back to the second driving signal generation unit 60B. The second phase shift unit 62B shifts the phase of the driving voltage waveform output from the second driving signal generation unit 60B. The second phase shift unit 62B shifts the phase by 90°, for example.

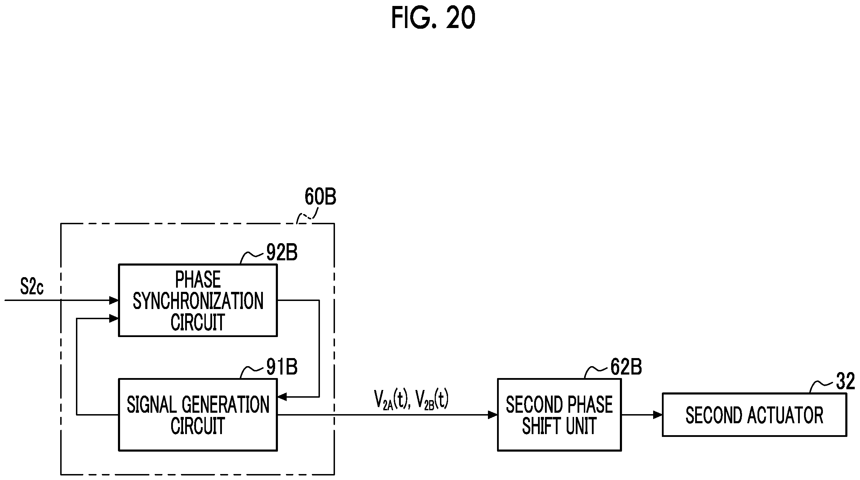

Fig. 20 shows an example of a configuration of the second driving signal generation unit 60B. As shown in Fig. 20, the second driving signal generation unit 60B includes a signal generation circuit 91B and a phase synchronization circuit 92B. The second driving signal generation unit 60B is a so-called PLL type drive circuit.

A sampling reset signal having the second driving frequency $f_{d2}$ is input to the phase synchronization circuit 92B from the signal generation circuit 91B, and the second angle detection signal S2c is input from the second signal processing unit 61B (see Fig. 10). The phase synchronization circuit 92B adjusts a phase of a sampling clock signal generated by itself based on the sampling reset signal and the second angle detection signal S2c.

The signal generation circuit 91B generates the driving voltage waveforms $V_{2A}$ (t) and $V_{2B}$ (t) constituting the second driving signal based on the sampling clock signal input from the phase synchronization circuit 92B.

In this way, the feedback control is performed such that a phase difference between the second driving signal and the second angle detection signal S2c is maintained at 90° by the second phase shift unit 62B and the second driving signal generation unit 60B of the PLL type. By maintaining the phase difference between the second driving signal and the second angle detection signal S2c at 90°, the swing of the mirror portion 20 around the second axis $a_2$ is maintained in a resonance state.

Returning to Fig. 10, the first zero cross pulse output unit 63A generates a zero cross pulse (hereinafter, referred to as a first zero cross pulse) ZC1 based on the first angle detection signal S1c input from the first signal processing unit 61A. The first zero cross pulse output unit 63A is composed of a zero cross detection circuit.

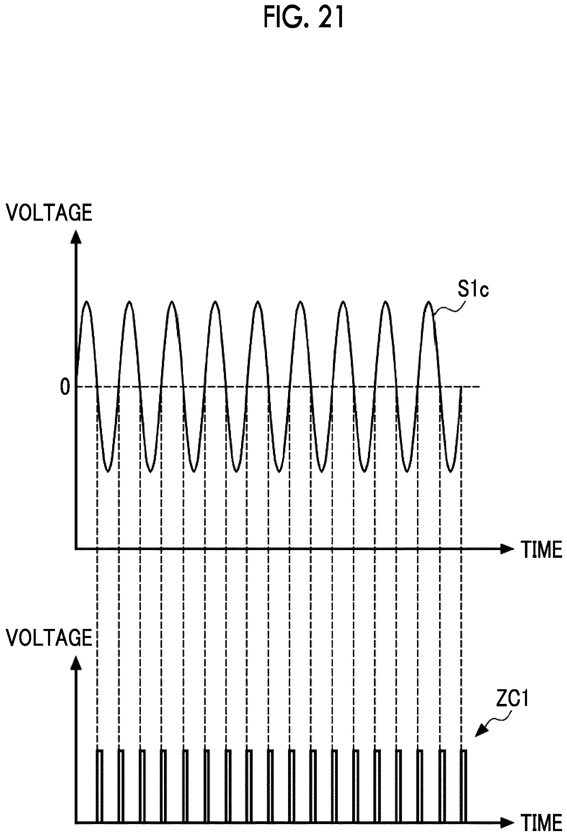

As shown in Fig. 21, the first zero cross pulse output unit 63A generates the first zero cross pulse ZC1 at a timing at which the first angle detection signal S1c, which is an AC signal, crosses zero volt. The first zero cross pulse output unit 63A inputs the generated first zero cross pulse ZC1 to the light source driving unit 3A.

The second zero cross pulse output unit 63B generates a zero cross pulse (hereinafter, referred to as a second zero cross pulse) ZC2 based on the second angle detection signal S2c input from the second signal processing unit 61B. The second zero cross pulse output unit 63B is composed of a zero cross detection circuit.

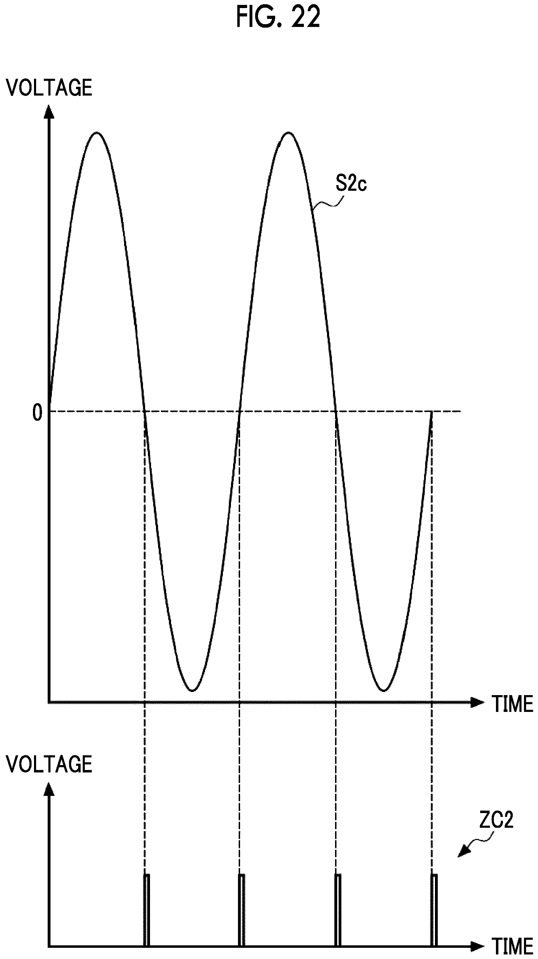

As shown in Fig. 22, the second zero cross pulse output unit 63B generates the second zero cross pulse ZC2 at a timing at which the second angle detection signal S2c, which is an AC signal, crosses zero volt. The second zero cross pulse output unit 63B inputs the generated second zero cross pulse ZC2 to the light source driving unit 3A.

The light source driving unit 3A drives the light source 3 based on drawing data supplied from the outside of the image drawing system 10, for example. In addition, the light source driving unit 3A controls the irradiation timing such that the irradiation timing of the laser light is synchronized with the first zero cross pulse ZC1 and the second zero cross pulse ZC2 input from the mirror driving unit 4A.

As described above, according to the technique of the present disclosure, by subtracting one of the pair of first output signals output from the pair of first angle detection sensors from the other, the vibration noise caused by the swing of the mirror portion around the second axis is removed. As a result, since the first angle detection signal representing the angle of the mirror portion around the first axis, from which the vibration noise is removed, is generated, the swing of the mirror portion can be accurately controlled. In addition, by maintaining the swing of the mirror portion in a resonance state, the amplitude (maximum deflection angle) of the swing of the mirror portion is maintained constant.

[Second Embodiment]

Next, an image drawing system according to a second embodiment will be described. In the image drawing system of the present embodiment, the disposition of the pair of first angle detection sensors 11A and 11B and the pair of second angle detection sensors 12A and 12B in the MMD 4 is different from that of the first embodiment. In the first embodiment, the pair of first angle detection sensors 11A and 11B are disposed at positions facing each other across the first axis $a_1$, whereas, in the second embodiment, the pair of first angle detection sensors 11A and 11B are disposed at positions facing each other across the second axis $a_2$. In the first embodiment, the pair of second angle detection sensors 12A and 12B are disposed at positions facing each other across the second axis $a_2$, whereas, in the second embodiment, the pair of second angle detection sensors 12A and 12B are disposed at positions facing each other across the first axis $a_1$.

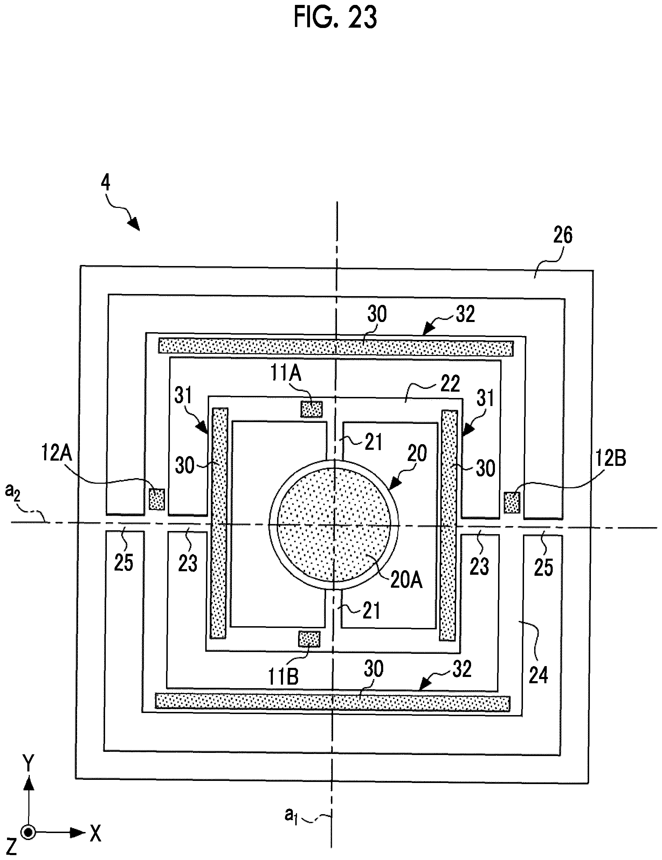

Fig. 23 is a plan view showing the configuration of the MMD 4 according to the present embodiment. As shown in Fig. 23, the pair of first angle detection sensors 11A and 11B are disposed in the vicinity of the first support portion 21 on the first movable frame 22. The first angle detection sensor 11A is disposed in the vicinity of the first support portion 21 connected to one side of the mirror portion 20. The first angle detection sensor 11B is disposed in the vicinity of the first support portion 21 connected to the other side of the mirror portion 20. Therefore, the pair of first angle detection sensors 11A and 11B are disposed at positions facing each other across the second axis $a_2$ and facing each other across the mirror portion 20. In addition, the pair of first angle detection sensors 11A and 11B are disposed at positions deviated from the first axis $a_1$ in the same direction (in the present embodiment, -X direction).

The pair of second angle detection sensors 12A and 12B are disposed in the vicinity of the second support portion 23 on the second movable frame 24. The second angle detection sensor 12A is disposed in the vicinity of the second support portion 23 connected to one side of the first movable frame 22. The second angle detection sensor 12B is disposed in the vicinity of the second support portion 23 connected to the other side of the first movable frame 22. Therefore, the pair of second angle detection sensors 12A and 12B are disposed at positions facing each other across the first axis $a_1$ and facing each other across the mirror portion 20 and the first movable frame 22. In addition, the pair of second angle detection sensors 12A and 12B are disposed at positions deviated from the second axis $a_2$ in the same direction (in the present embodiment, +Y direction).

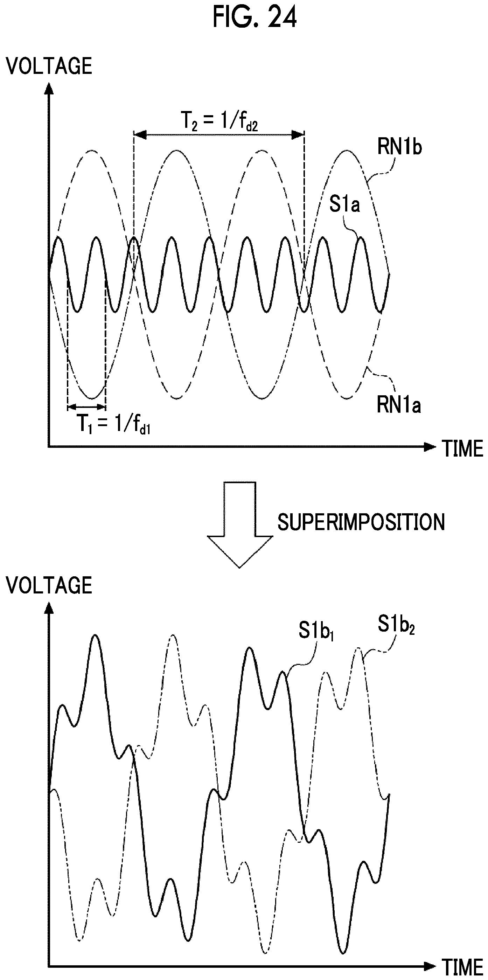

Fig. 24 shows an example of signals output from the pair of first angle detection sensors 11A and 11B in the present embodiment. In Fig. 24, S1a represents a signal output from the pair of first angle detection sensors 11A and 11B in a case where the mirror portion 20 swings only around the first axis $a_1$ without swinging around the second axis $a_2$. In the present embodiment, since the first angle detection sensors 11A and 11B are disposed at positions deviated in the same direction with respect to the first axis $a_1$, waveform signals having the same phase and having the first driving frequency $f_{d1}$ are output from the first angle detection sensors 11A and 11B.

In a case where the mirror portion 20 swings around the first axis $a_1$ and the second axis $a_2$ simultaneously, a vibration noise RN1a caused by the swing of the mirror portion 20 around the second axis $a_2$ is superimposed on the output signal of the first angle detection sensor 11A. Similarly, in a case where the mirror portion 20 swings around the first axis $a_1$ and the second axis $a_2$ simultaneously, a vibration noise RN1b caused by the swing of the mirror portion 20 around the second axis $a_2$ is superimposed on the output signal of the first angle detection sensor 11B. Since the first angle detection sensors 11A and 11B are disposed at positions facing each other across the second axis $a_2$, the vibration noises RN1a and RN1b superimposed on the first angle detection sensors 11A and 11B are in an anti-phase with each other.

As described above, in a case of the biaxial drive, the signal S1b; on which the vibration noise RN1a is superimposed is output from the first angle detection sensor 11A, and the signal $S1b_2$ on which the vibration noise RN1b is superimposed is output from the first angle detection sensor 11B.

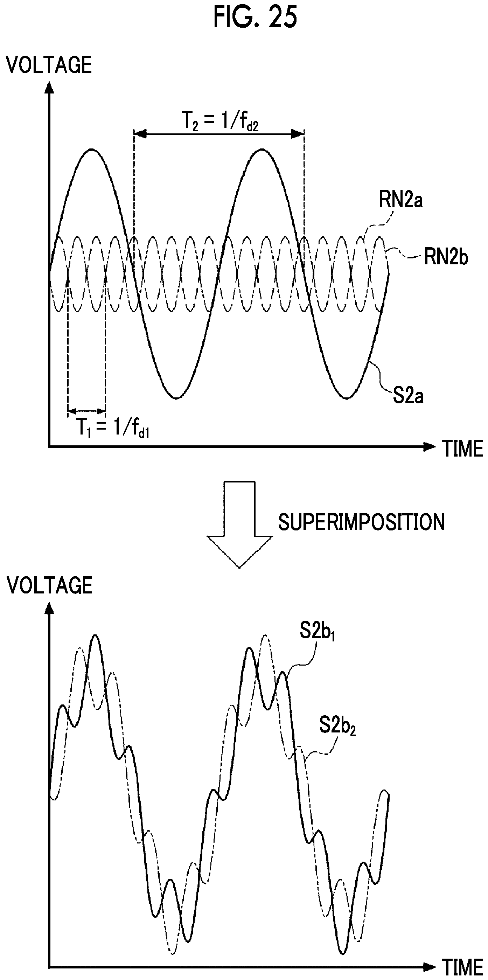

Fig. 25 shows an example of signals output from the pair of second angle detection sensors 12A and 12B in the present embodiment. In Fig. 25, S2a represents a signal output from the pair of second angle detection sensors 12A and 12B in a case where the mirror portion 20 swings only around the second axis $a_2$ without swinging around the first axis $a_1$. In the present embodiment, since the second angle detection sensors 12A and 12B are disposed at positions deviated in the same direction with respect to the second axis $a_2$, waveform signals having the same phase and having the second driving frequency $f_{d2}$ are output from the second angle detection sensors 12A and 12B.

In a case where the mirror portion 20 swings around the first axis $a_1$ and the second axis $a_2$ simultaneously, a vibration noise RN2a caused by the swing of the mirror portion 20 around the first axis $a_1$ is superimposed on the output signal of the second angle detection sensor 12A. Similarly, in a case where the mirror portion 20 swings around the first axis $a_1$ and the second axis $a_2$ simultaneously, a vibration noise RN2b caused by the swing of the mirror portion 20 around the first axis $a_1$ is superimposed on the output signal of the second angle detection sensor 12B. Since the second angle detection sensors 12A and 12B are disposed at positions facing each other across the first axis $a_1$, the vibration noises RN2a and RN2b superimposed on the second angle detection sensors 12A and 12B are in an anti-phase with each other.

As described above, in a case of the biaxial drive, the signal $S2b_1$ on which the vibration noise RN2a is superimposed is output from the second angle detection sensor 12A, and the signal $S2b_2$ on which the vibration noise RN2b is superimposed is output from the second angle detection sensor 12B.

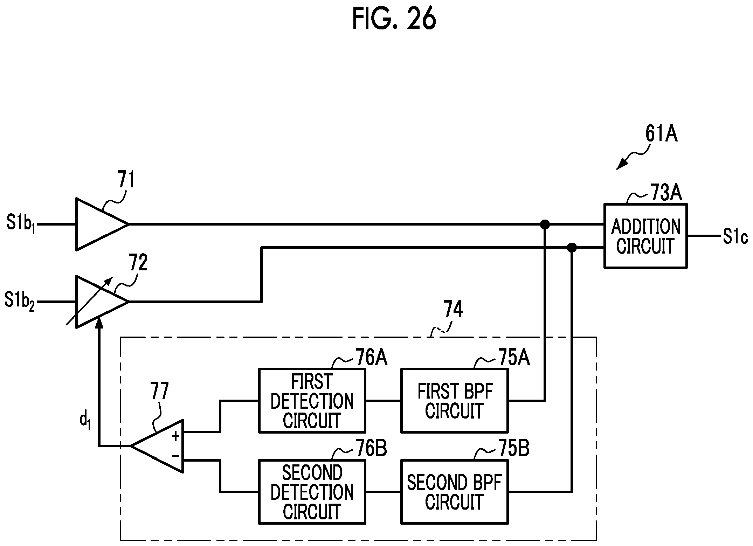

In the present embodiment, the driving controller 5 is different from the configuration of the driving controller 5 of the first embodiment only in the configuration of the first signal processing unit 61A and the second signal processing unit 61B. As shown in Fig. 26, in the present embodiment, the first signal processing unit 61A includes an addition circuit 73A instead of the subtraction circuit 73. The addition circuit 73A outputs a value obtained by adding the signal S1b; input from the first angle detection sensor 11A via the buffer amplifier 71 and the signal $S1b_2$ input from the first angle detection sensor 11B via the variable gain amplifier 72.

In the present embodiment, the gain adjustment circuit 74 adjusts an amplitude level of the vibration noise RN1b included in the signal $S1b_2$ so as to match an amplitude level of the vibration noise RN1a included in the signal $S1b_1$. Therefore, the vibration noises RN1a and RN1b are offset by addition processing by the addition circuit 73A. Therefore, the addition circuit 73A outputs the first angle detection signal S1c which is a signal from which the vibration noises RN1a and RN1b have been removed.

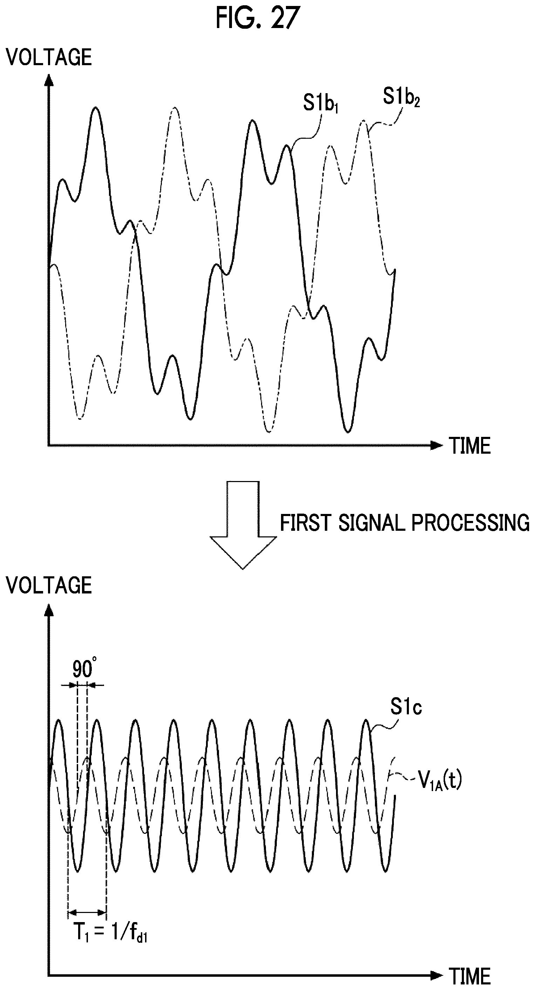

Fig. 27 shows a state in which the first angle detection signal S1c is generated based on S1b; and $S1b_2$ output from the pair of first angle detection sensors 11A and 11B in the present embodiment. Also in the present embodiment, the same first angle detection signal S1c as in the first embodiment is obtained (see Fig. 15).

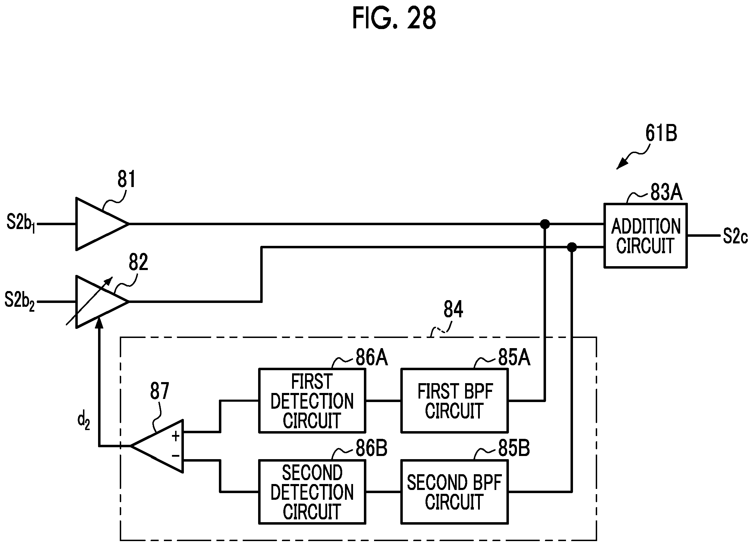

As shown in Fig. 28, in the present embodiment, the second signal processing unit 61B includes an addition circuit 83A instead of the subtraction circuit 83. The addition circuit 83A outputs a value obtained by adding the signal $S2b_1$ input from the second angle detection sensor 12A via the buffer amplifier 81 and the signal $S2b_2$ input from the second angle detection sensor 12B via the variable gain amplifier 82.

In the present embodiment, the gain adjustment circuit 84 adjusts an amplitude level of the vibration noise RN2b included in the signal $S2b_2$ so as to match an amplitude level of the vibration noise RN2a included in the signal $S2b_1$. Therefore, the vibration noises RN2a and RN2b are offset by addition processing by the addition circuit 83A. Therefore, the addition circuit 83A outputs the second angle detection signal S2c which is a signal from which the vibration noises RN2a and RN2b have been removed.

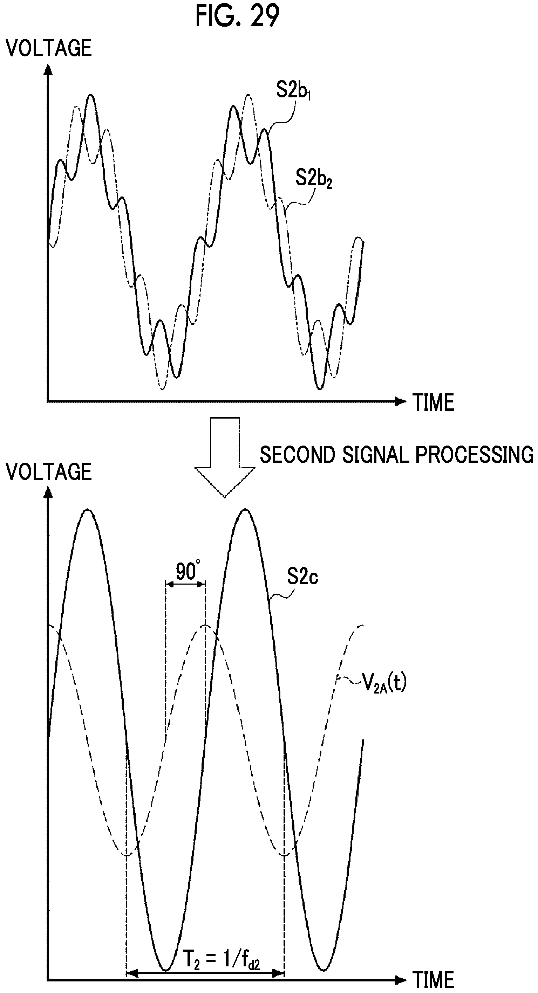

Fig. 29 shows a state in which the second angle detection signal S2c is generated based on $S2b_1$ and $S2b_2$ output from the pair of second angle detection sensors 12A and 12B in the present embodiment. Also in the present embodiment, the same second angle detection signal S2c as in the first embodiment is obtained (see Fig. 15).

As described above, the pair of first angle detection sensors 11A and 11B need only be disposed at positions facing each other across the first axis $a_1$ or the second axis $a_2$. In a case where the pair of first angle detection sensors 11A and 11B are disposed at positions facing each other across the first axis $a_1$, the vibration noise can be removed by subtracting one of the output signals of the first angle detection sensors 11A and 11B from the other. In a case where the pair of first angle detection sensors 11A and 11B are disposed at positions facing each other across the second axis $a_2$, the vibration noise can be removed by adding the output signals of the first angle detection sensors 11A and 11B.

Similarly, the pair of second angle detection sensors 12A and 12B need only be disposed at positions facing each other across the first axis $a_1$ or the second axis $a_2$. In a case where the pair of second angle detection sensors 12A and 12B are disposed at positions facing each other across the second axis $a_2$, the vibration noise can be removed by subtracting one of the output signals of the second angle detection sensors 12A and 12B from the other. In a case where the pair of second angle detection sensors 12A and 12B are disposed at positions facing each other across the first axis $a_1$, the vibration noise can be removed by adding the output signals of the second angle detection sensors 12A and 12B.

[Modification Example]

Next, a modification example of each of the above-described embodiments will be described. In each of the above-described embodiments, the gain adjustment circuit 74 extracts a vibration noise having the second driving frequency $f_{d2}$ by the first BPF circuit 75A and the second BPF circuit 75B. Alternatively, the vibration noise having the second driving frequency $f_{d2}$ may be extracted by a low-pass filter circuit having a cutoff frequency between the first driving frequency $f_{d1}$ and the second driving frequency $f_{d2}$. In addition, in each of the above-described embodiments, the gain adjustment circuit 84 extracts a vibration noise having the first driving frequency $f_{d1}$ by the first BPF circuit 85A and the second BPF circuit 85B. Alternatively, the vibration noise having the first driving frequency $f_{d1}$ may be extracted by a high-pass filter circuit having a cutoff frequency between the first driving frequency $f_{d1}$ and the second driving frequency $f_{d2}$.

The configuration of the MMD 4 shown in the above embodiment is an example. The configuration of the MMD 4 can be modified in various ways. For example, the first actuator 31 that allows the mirror portion 20 to swing around the first axis $a_1$ may be disposed on the second movable frame 24, and the second actuator 32 that allows the mirror portion 20 to swing around the second axis $a_2$ may be disposed on the first movable frame 22.

The hardware configuration of the driving controller 5 can be variously modified. In each of the above-described embodiments, the driving controller 5 includes an analog arithmetic circuit, and can also include a digital arithmetic circuit. The driving controller 5 may be composed of one processor or may be composed of a combination of two or more processors of the same type or different types. The processor includes, for example, a central processing unit (CPU), a programmable logic device (PLD), or a dedicated electric circuit. As is well known, the CPU is a general-purpose processor that executes software (program) to function as various processing units. The PLD is a processor such as a field programmable gate array (FPGA) whose circuit configuration can be changed after manufacture. The dedicated electric circuit is a processor that has a dedicated circuit configuration designed to perform a specific process, such as an application specific integrated circuit (ASIC).

[Comparative Example]

Next, a comparative example with the technology of the present disclosure will be described. In the technique of the present disclosure, a vibration noise is removed by adding or subtracting a pair of output signals output from a pair of angle detection sensors as described above. With respect to this, it is considered to remove a vibration noise by performing frequency filter processing on the output signal output from the angle detection sensor. Hereinafter, as a comparative example, an example of removing a vibration noise by frequency filter processing will be described.

In the present comparative example, at least any one of the pair of first angle detection sensors 11A and 11B need only be provided. In addition, at least any one of the pair of second angle detection sensors 12A and 12B need only be provided.

In the present comparative example, the first signal processing unit 61A is a band pass filter circuit that has a pass band having the first driving frequency $f_{d1}$ as a center frequency. Similarly, the second signal processing unit 61B is a band pass filter circuit that has a pass band having the second driving frequency $f_{d2}$ as a center frequency. As a result, a signal from which the vibration noise having the second driving frequency $f_{d2}$ has been removed is output from the first signal processing unit 61A. A signal from which the vibration noise having the first driving frequency $f_{d1}$ has been removed is output from the second signal processing unit 61B.

In this way, a vibration noise can be removed by using the first signal processing unit 61A and the second signal processing unit 61B as a band pass filter circuit, but accurate phase information may not be obtained from a signal from which the vibration noise has been removed. This is due to a phase response of the band pass filter circuit.

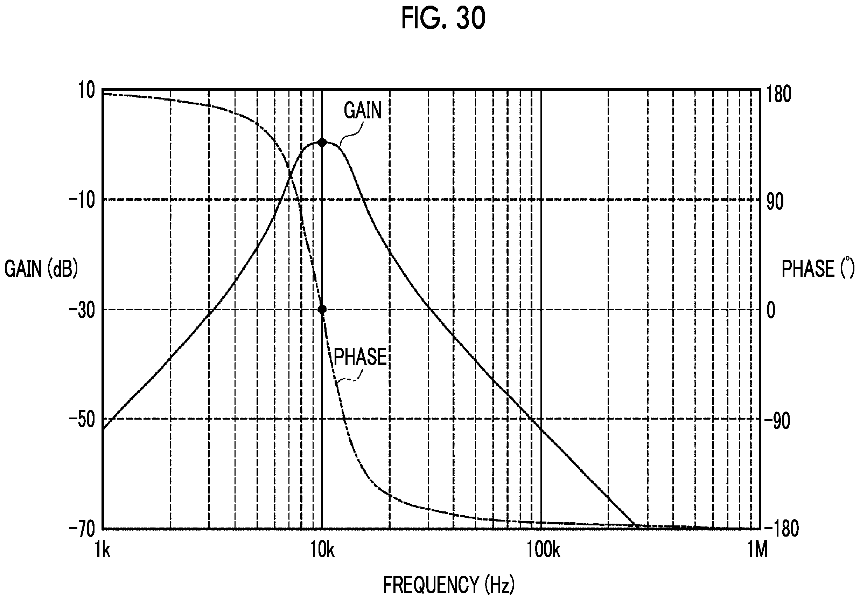

Fig. 30 shows an example of gain and phase characteristics of the band pass filter circuit. A center frequency of the band pass filter circuit shown in Fig. 30 is 10 kHz. A phase changes abruptly in the vicinity of the center frequency. Therefore, in a case where a frequency of a signal input to the band pass filter circuit deviates from the center frequency, a phase of an output signal from the band pass filter circuit changes significantly. In this way, since the phase of the output signal from the angle detection sensor may change significantly due to passing through the band pass filter circuit, it is difficult to use the output signal from the band pass filter circuit as timing information for maintaining a resonance state.

In a case where a zero cross pulse is generated based on the output signal from the band pass filter circuit and input to the light source driving unit 3A, an image out of synchronization with the scanning of light by the MMD 4 is drawn on the surface to be scanned 6. In this case, it is necessary to provide a phase shifter capable of manually adjusting the phase of the output signal from the band pass filter circuit and to manually adjust the phase shifter so that there is no deviation while a user observes the image drawn on the surface to be scanned 6.

On the other hand, in the technique of the present disclosure, a vibration noise is removed by adding or subtracting a pair of output signals output from a pair of angle detection sensors without using a band pass filter circuit. Therefore, the phase of the output signal does not change significantly by the removal of the vibration noise, and the output signal can be used as timing information for maintaining a resonance state. Therefore, it is not necessary for the user to manually adjust the phase shifter.

## Claims

1. An optical scanning device (2) comprising:

   a mirror portion (4) having a reflecting surface for reflecting incident light;
   a first actuator (31) that allows the mirror portion to swing around a first axis located in a plane including the reflecting surface of the mirror portion in a stationary state;
   a second actuator (32) that allows the mirror portion to swing around a second axis which is located in the plane including the reflecting surface of the mirror portion in the stationary state and is orthogonal to the first axis;
   a pair of first angle detection sensors (11A, 11B) that output a signal corresponding to an angle of the mirror portion around the first axis, the pair of first angle detection sensors being disposed at positions facing each other across the first axis; and
   at least one processor,
   wherein the processor generates a first angle detection signal representing the angle of the mirror portion around the first axis by adjusting an amplitude level of at least one of the pair of first output signals to match amplitudes of vibration noises respectively included in the pair of first output signals output from the pair of first angle detection sensors with each other, and subtracting one of the adjusted pair of first output signals from the other.

2. The optical scanning device according to claim 1,

   wherein the processor
   includes a first driving signal generation unit that generates a first driving signal applied to the first actuator, and
   feeds back the first angle detection signal to the first driving signal generation unit.

3. The optical scanning device according to claim 2, wherein the first driving signal generation unit is a drive circuit having a phase synchronization circuit.

4. The optical scanning device according to claim 2 or 3,
   wherein the first driving signal is a sinusoidal wave.

5. The optical scanning device according to any one of claims 1 to 4,
   wherein the first angle detection sensor is a piezoelectric element.

6. The optical scanning device according to any one of claims 1 to 5, further comprising:

   a pair of second angle detection sensors that output a signal corresponding to an angle of the mirror portion around the second axis, the pair of second angle detection sensors being disposed at positions facing each other across the first axis or the second axis,
   wherein the processor generates a second angle detection signal representing the angle of the mirror portion around the second axis by adjusting an amplitude level of at least one of a pair of second output signals output from the pair of second angle detection sensors and adding or subtracting the pair of second output signals whose amplitude level has been adjusted.

7. The optical scanning device according to claim 6, wherein the processor adjusts the amplitude level of at least one of the pair of second output signals to match amplitudes of vibration noises respectively included in the pair of second output signals with each other, and then adds or subtracts the pair of second output signals.

8. The optical scanning device according to claim 6 or 7,

wherein the pair of second angle detection sensors are disposed at the positions facing each other across the second axis, and
the processor generates the second angle detection signal by subtracting one of the pair of second output signals whose amplitude level has been adjusted from the other.

9. The optical scanning device according to claim 6 or 7,

wherein the pair of second angle detection sensors are disposed at the positions facing each other across the first axis, and
the processor generates the second angle detection signal by adding the pair of second output signals whose amplitude level has been adjusted.

10. The optical scanning device according to any one of claims 6 to 9,

wherein the processor
includes a second driving signal generation unit that generates a second driving signal applied to the second actuator, and
feeds back the second angle detection signal to the second driving signal generation unit.

11. The optical scanning device according to claim 10, wherein the second driving signal generation unit is a drive circuit having a phase synchronization circuit.

12. The optical scanning device according to claim 10 or 11,
wherein the second driving signal is a sinusoidal wave.

13. The optical scanning device according to any one of claims 6 to 12,
wherein the second angle detection sensor is a piezoelectric element.

14. An image drawing system comprising:

the optical scanning device according to any one of claims 6 to 13; and
a light source that irradiates the mirror portion with light,
wherein the processor controls a light irradiation timing of the light source based on the first angle detection signal and the second angle detection signal.

15. A method of driving the optical scanning device of any preceding claim, the method comprising:
generating a first angle detection signal representing the angle of the mirror portion around the first axis by adjusting an amplitude level of at least one of the pair of first output signals to match amplitudes of vibration noises respectively included in the pair of first output signals output from the pair of first angle detection sensors with each other, and subtracting one of the adjusted pair of first output signals from the other.

**Patentansprüche**

1. Optische Abtastvorrichtung (2), umfassend:

einen Spiegelabschnitt (4) mit einer Reflexionsfläche zum Reflektieren von einfallendem Licht;
einen ersten Aktuator (31), der es dem Spiegelabschnitt ermöglicht, sich um eine erste Achse, die sich in einer Ebene, die die Reflexionsfläche des Spiegelabschnitts in einem stationären Zustand enthält, befindet, zu schwingen;
einen zweiten Aktuator (32), der es dem Spiegelabschnitt ermöglicht, sich um eine zweite Achse, die sich in der Ebene, die die Reflexionsfläche des Spiegelabschnitts in dem stationären Zustand enthält und zu der ersten Achse senkrecht ist, befindet, zu schwingen;
ein Paar erste Winkeldetektionssensoren (11A, 11B), die ein Signal, das einem Winkel des Spiegelabschnitts um die erste Achse entspricht, ausgeben, wobei das Paar erste Winkeldetektionssensoren an Positionen, die über die erste Achse einander zugewandt sind, angeordnet sind; und
mindestens einen Prozessor,
wobei der Prozessor ein erstes Winkeldetektionssignal, das den Winkel des Spiegelabschnitts um die erste Achse darstellt, durch Anpassen eines Amplitudenpegels mindestens eines Paars erster Ausgangssignale derart, dass Amplituden von Schwingungsrauschen, die jeweils in dem Paar ersten Ausgangssignalen, die von dem Paar ersten Winkeldetektionssensoren ausgegeben werden, enthalten sind, miteinander übereinstimmen, und durch Subtrahieren eines von dem angepassten Paar ersten Ausgangssignalen von dem anderen erzeugt.

2. Optische Abtastvorrichtung nach Anspruch 1,

wobei der Prozessor
eine Erzeugungseinheit für erstes Antriebssignal enthält, die ein erstes Antriebssignal, das auf den ersten Aktuator angewendet wird, erzeugt, und

das erste Winkeldetektionssignal an die Erzeugungseinheit für erstes Antriebssignal zurückführt.

3. Optische Abtastvorrichtung nach Anspruch 2, wobei die Erzeugungseinheit für erstes Antriebssignal eine Antriebsschaltung mit einer Phasensynchronisationsschaltung ist.

4. Optische Abtastvorrichtung nach Anspruch 2 oder 3, wobei das erste Antriebssignal eine Sinuswelle ist.

5. Optische Abtastvorrichtung nach einem der Ansprüche 1 bis 4, wobei der erste Winkeldetektionssensor ein piezoelektrisches Element ist.

6. Optische Abtastvorrichtung nach einem der Ansprüche 1 bis 5, ferner umfassend:

ein Paar zweite Winkeldetektionssensoren, die ein Signal, das einem Winkel des Spiegelabschnitts um die zweite Achse entspricht, ausgeben, wobei das Paar zweite Winkeldetektionssensoren an Positionen, die über die erste Achse oder die zweite Achse einander zugewandt sind, angeordnet sind, wobei der Prozessor ein zweites Winkeldetektionssignal, das den Winkel des Spiegelabschnitts um die zweite Achse darstellt, durch Anpassen eines Amplitudenpegels mindestens eines von einem Paar zweiten Ausgangssignalen, die von dem Paar zweiten Winkeldetektionssensoren ausgegeben werden, und durch Addieren oder Subtrahieren des Paars zweiter Ausgangssignale, deren Amplitudenpegel angepasst wurde, erzeugt.

7. Optische Abtastvorrichtung nach Anspruch 6, wobei der Prozessor den Amplitudenpegel mindestens eines von dem Paar zweiten Ausgangssignalen so anpasst, dass Amplituden von Schwingungsrauschen, die jeweils in dem Paar zweiten Ausgangssignalen enthalten sind, miteinander übereinstimmen, und dann das Paar zweite Ausgangssignale addiert oder subtrahiert.

8. Optische Abtastvorrichtung nach Anspruch 6 oder 7,

wobei das Paar zweite Winkeldetektionssensoren an den Positionen, die über die zweite Achse einander zugewandt sind, angeordnet sind, und der Prozessor das zweite Winkeldetektionssignal durch Subtrahieren eines von dem Paar zweiten Ausgangssignalen, deren Amplitudenpegel angepasst wurde, von dem anderen erzeugt.

9. Optische Abtastvorrichtung nach Anspruch 6 oder 7,

wobei das Paar zweite Winkeldetektionssensoren an den Positionen, die über die erste Achse einander zugewandt sind, angeordnet sind, und der Prozessor das zweite Winkeldetektionssignal durch Addieren des Paars zweiter Ausgangssignale, deren Amplitudenpegel angepasst wurde, erzeugt.

10. Optische Abtastvorrichtung nach einem der Ansprüche 6 bis 9,

wobei der Prozessor eine Erzeugungseinheit für zweites Antriebssignal enthält, die ein zweites Antriebssignal, das auf den zweiten Aktuator angewendet wird, erzeugt, und das zweite Winkeldetektionssignal an die Erzeugungseinheit für zweites Antriebssignal zurückführt.

11. Optische Abtastvorrichtung nach Anspruch 10, wobei die Erzeugungseinheit für zweites Antriebssignal eine Antriebsschaltung mit einer Phasensynchronisationsschaltung ist.

12. Optische Abtastvorrichtung nach Anspruch 10 oder 11, wobei das zweite Antriebssignal eine Sinuswelle ist.

13. Optische Abtastvorrichtung nach einem der Ansprüche 6 bis 12, wobei der zweite Winkeldetektionssensor ein piezoelektrisches Element ist.

14. Bildzeichnungssystem, umfassend:

die optische Abtastvorrichtung nach einem der Ansprüche 6 bis 13; und eine Lichtquelle, die den Spiegelabschnitt mit Licht bestrahlt, wobei der Prozessor einen Lichtbestrahlungszeitpunkt der Lichtquelle auf der Grundlage des ersten Winkeldetektionssignals und des zweiten Winkeldetektionssignals steuert.

15. Verfahren des Antreibens der optischen Abtastvorrichtung eines beliebigen der vorhergehenden Ansprüche, wobei das Verfahren umfasst: Erzeugen eines ersten Winkeldetektionssignals, das den Winkel des Spiegelabschnitts um die erste Achse darstellt, durch Anpassen eines Amplitudenpegels mindestens eines Paars erster Ausgangssignale derart, dass Amplituden von Schwingungsrauschen, die jeweils in dem Paar ersten Ausgangssignalen, die von dem Paar ersten Winkeldetektionssensoren ausgegeben werden, enthalten sind, miteinander übereinstimmen, und durch Subtrahieren eines von dem angepassten Paar ersten Ausgangssignalen von dem anderen.

## Revendications

1. Dispositif de balayage optique (2) comprenant :

   une portion de miroir (4) ayant une surface réfléchissante pour réfléchir de la lumière incidente ;
   un premier actionneur (31) qui permet à la portion de miroir de pivoter autour d'un premier axe situé dans un plan incluant la surface réfléchissante de la portion de miroir dans un état stationnaire ;
   un deuxième actionneur (32) qui permet à la portion de miroir de pivoter autour d'un deuxième axe qui est situé dans le plan incluant la surface réfléchissante de la portion de miroir dans l'état stationnaire et qui est orthogonal au premier axe ;
   une paire de premiers capteurs de détection de angle (11A, 11B) qui émettent un signal correspondant à un angle de la portion de miroir autour du premier axe, la paire de premiers capteurs de détection d'angle étant disposée à des positions faisant face l'une à l'autre sur le premier axe ; et
   au moins un processeur,
   dans lequel le processeur génère un premier signal de détection d'angle représentant l'angle de la portion de miroir autour du premier axe en ajustant un niveau d'amplitude d'au moins l'un de la paire de premiers signaux de sortie pour faire correspondre des amplitudes de bruits de vibration respectivement inclus dans la paire de premiers signaux de émis par la paire de premiers capteurs de détection d'angle entre eux, et en soustrayant l'un de la paire ajustée de premiers signaux de sortie de l'autre.

2. Dispositif de balayage optique selon la revendication 1,

   dans lequel le processeur
   inclut une première unité de génération de signal de commande qui génère un premier signal de commande appliqué au premier actionneur, et
   renvoie le premier signal de détection d'angle à la première unité de génération de signal de commande.

3. Dispositif de balayage optique selon la revendication 2,
   dans lequel la première unité de génération de signal de commande est un circuit de commande ayant un circuit de synchronisation de phase.

4. Dispositif de balayage optique selon la revendication 2 ou la revendication 3, dans lequel le premier signal de commande est une onde sinusoïdale.

5. Dispositif de balayage optique selon l'une quelconque des revendications 1 à 4, dans lequel le premier capteur de détection d'angle est un élément piézoélectrique.

6. Dispositif de balayage optique selon l'une quelconque des revendications 1 à 5, comprenant en outre :

   une paire de deuxièmes capteurs de détection d'angle qui émettent un signal correspondant à un angle de la portion de miroir autour du deuxième axe, la paire de deuxièmes capteurs de détection d'angle étant disposée à des positions faisant face l'une à l'autre sur le premier axe ou le deuxième axe,
   dans lequel le processeur génère un deuxième signal de détection d'angle représentant l'angle de la portion de miroir autour du deuxième axe en ajustant un niveau d'amplitude d'au moins l'un d'une paire de deuxièmes signaux de sortie émis par la paire de deuxièmes capteurs de détection d'angle et en additionnant ou en soustrayant la paire de deuxièmes signaux de sortie dont un niveau d'amplitude a été ajusté.

7. Dispositif de balayage optique selon la revendication 6,
   dans lequel le processeur ajuste le niveau d'amplitude d'au moins l'un de la paire de deuxièmes signaux de sortie pour faire correspondre des amplitudes de bruits de vibration respectivement inclus dans la paire de deuxièmes signaux de sortie entre eux, et puis additionne ou soustrait la paire de deuxièmes signaux de sortie.

8. Dispositif de balayage optique selon la revendication 6 ou la revendication 7,

   dans lequel la paire de deuxièmes capteurs de détection d'angle est disposée aux positions faisant face l'une à l'autre sur le deuxième axe, et
   le processeur génère le deuxième signal de détection d'angle en soustrayant l'un de la paire de deuxièmes signaux de sortie dont le niveau d'amplitude a été ajusté à partir de l'autre.

9. Dispositif de balayage optique selon la revendication 6 ou la revendication 7,

dans lequel la paire de deuxièmes capteurs de détection d'angle est disposée aux positions faisant face l'une à l'autre sur le premier axe, et le processeur génère le deuxième signal de détection d'angle en additionnant la paire de deuxièmes signaux de sortie dont le niveau d'amplitude a été ajusté.

10. Dispositif de balayage optique selon l'une quelconque des revendications 6 à 9, dans lequel le processeur

inclut une deuxième unité de génération de signal de commande qui génère un deuxième signal de commande appliqué au deuxième actionneur, et
renvoie le deuxième signal de détection d'angle à la deuxième unité de génération de signal de commande.

11. Dispositif de balayage optique selon la revendication 10,
dans lequel la deuxième unité de génération de signal de commande est un circuit de commande ayant un circuit de synchronisation de phase.

12. Dispositif de balayage optique selon la revendication 10 ou la revendication 11, dans lequel le deuxième signal de commande est une onde sinusoïdale.

13. Dispositif de balayage optique selon l'une quelconque des revendications 6 à 12, dans lequel le deuxième capteur de détection d'angle est un élément piézoélectrique.

14. Système de dessin d'images comprenant :

le dispositif de balayage optique selon l'une quelconque des revendications 6 à 13 ; et
une source de lumière qui irradie la portion de miroir avec de la lumière,
dans lequel le processeur contrôle une synchronisation d'irradiation lumineuse de la source de lumière sur la base du premier signal de détection d'angle et du deuxième signal de détection d'angle.

15. Procédé de commande du dispositif de balayage optique de l'une des revendications précédentes, le procédé comprenant :
générer un premier signal de détection d'angle représentant l'angle de la portion de miroir autour du premier axe en ajustant un niveau d'amplitude d'au moins l'un de la paire de premiers signaux de sortie pour faire correspondre des amplitudes de bruits de vibration respectivement inclus dans la paire de premiers signaux de sortie émis par la paire de premiers capteurs de détection d'angle entre eux, et en soustrayant l'un de la paire ajustée de premiers signaux de sortie de l'autre.

# FIG. 1

FIG. 2

EP 4 191 318 B1

# FIG. 3

EP 4 191 318 B1

# FIG. 4

EP 4 191 318 B1

# FIG. 5

FIG. 6

# FIG. 7

FIG. 8

# FIG. 9A

# FIG. 9B

## FIG. 10

FIRST ANGLE DETECTION SENSOR ~11A

FIRST ANGLE DETECTION SENSOR ~11B

FIRST ACTUATOR ~31

SECOND ANGLE DETECTION SENSOR ~12A

SECOND ANGLE DETECTION SENSOR ~12B

SECOND ACTUATOR ~32

FIRST SIGNAL PROCESSING UNIT ~61A

FIRST PHASE SHIFT UNIT ~62A

FIRST DRIVING SIGNAL GENERATION UNIT ~60A

FIRST ZERO CROSS PULSE OUTPUT UNIT ~63A

SECOND SIGNAL PROCESSING UNIT ~61B

SECOND PHASE SHIFT UNIT ~62B

SECOND DRIVING SIGNAL GENERATION UNIT ~60B

SECOND ZERO CROSS PULSE OUTPUT UNIT ~63B

$V_{1A}(t), V_{1B}(t)$

$V_{2A}(t), V_{2B}(t)$

ZC1

ZC2

LIGHT SOURCE ~3

LIGHT SOURCE DRIVING UNIT ~3A

DRAWING DATA

EP 4 191 318 B1

# FIG. 11

# FIG. 12

# FIG. 13

EP 4 191 318 B1

# FIG. 14

# FIG. 15

VOLTAGE

$S1b_1$

$S1b_2$

TIME

FIRST SIGNAL PROCESSING

VOLTAGE

90°

$S1c$

$V_{1A}(t)$

$T_1 = 1/f_{d1}$

TIME

FIG. 16

EP 4 191 318 B1

# FIG. 17

# FIG. 18

VOLTAGE

S2b$_1$   S2b$_2$

TIME

SECOND SIGNAL PROCESSING

VOLTAGE

90°   S2c

V$_{2A}$(t)

T$_2$ = 1/f$_{d2}$

TIME

FIG. 19

EP 4 191 318 B1

## FIG. 20

# FIG. 21

# FIG. 22

# FIG. 23

## FIG. 24

VOLTAGE

$T_2 = 1/f_{d2}$

RN1b

S1a

RN1a

$T_1 = 1/f_{d1}$

TIME

SUPERIMPOSITION

VOLTAGE

$S1b_1$   $S1b_2$

TIME

# FIG. 25

FIG. 26

EP 4 191 318 B1

## FIG. 27

VOLTAGE

$S1b_1$　　$S1b_2$

TIME

FIRST SIGNAL PROCESSING

VOLTAGE

$90°$

$S1c$

$V_{1A}(t)$

$T_1 = 1/f_{d1}$

TIME

# FIG. 28

EP 4 191 318 B1

# FIG. 29

VOLTAGE

S2b$_1$

S2b$_2$

TIME

SECOND SIGNAL PROCESSING

VOLTAGE

90°

S2c

V$_{2A}$(t)

$T_2 = 1/f_{d2}$

TIME

## FIG. 30

EP 4 191 318 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019082639 A
- JP 2018063228 A
- JP 2019082634 A
- JP 2012237788 A